(19) Europäisches Patentamt
European Patent Office
Office européen des brevets

(11) EP 2 740 693 B1

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
**B65H 1/26** *(2006.01)*  **B65H 3/06** *(2006.01)*
**B65H 5/06** *(2006.01)*  **B65H 7/06** *(2006.01)*
**B65H 7/18** *(2006.01)*

(21) Anmeldenummer: **13190904.6**

(22) Anmeldetag: **30.10.2013**

(54) **Zuführstation**

Feeding station

Station d'acheminement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2012 DE 202012011876 U**

(43) Veröffentlichungstag der Anmeldung:
**11.06.2014 Patentblatt 2014/24**

(73) Patentinhaber: **Francotyp-Postalia GmbH**
**13089 Berlin (DE)**

(72) Erfinder:
• **Müller, Ralf**
**13355 Berlin (DE)**
• **Baum, Volker**
**13189 Berlin (DE)**

(56) Entgegenhaltungen:
WO-A1-92/16444     JP-A- H06 286 905
US-A1- 2004 223 797     US-A1- 2009 273 135

EP 2 740 693 B1

**Beschreibung**

Die Erfindung betrifft eine Zuführstation gemäß dem Oberbegriff des Patentanspruchs 1. Die Zuführstation dient zum Zuführen eines flachen Guts, welches einzeln oder aus einem Stapel einem nachfolgendem Gutverarbeitungsgerät zugeführt wird. Unter einem flachen Gut werden auch dünne Poststücke wie Postkarten, "normale" Poststücke mittlerer Dicke, wie zum Beispiel der sogenannte Standardbrief in Deutschland, als auch dicke Poststücke wie zum Beispiel der sogenannte Kompaktbrief in Deutschland, verstanden. Ein Poststück gilt als flach, wenn es im Vergleich mit den übrigen Dimensionen des Formats eine geringe Dicke in einer z-Richtung aufweist, wobei das Format in einer x-/y-Ebene eines kartesischen Koordinatensystems liegt. Die Zuführstation weist eine Steuerung auf, die das Zuführen so steuert, dass ein hoher Durchsatz erreicht wird. Die Zuführstation kommt in Verbindung mit Frankiermaschinen, Adressiermaschinen und anderen Postverarbeitungsgeräten zum Einsatz.

Es sind bereits Zuführungen unterschiedlichster Art bekannt, bei denen die Antriebselemente mechanisch gekoppelt sind. So dass gerade bei kurzen Gütern, d.h. Briefformaten bzw. Formaten von Poststücken, der Vereinzelungsantrieb sehr früh auf das nachfolgende Gut eine Antriebskraft einprägt, so dass Güter ohne oder mit einer unzureichenden Lücke vereinzelt werden. Außerdem gibt es keine Möglichkeit diese Lücken innerhalb der Zuführung zu variieren.

Eine Vereinzelungsvorrichtung der Firma Neopost weist zwei Vereinzelungsrollen und eine Transportvorrichtung mit einer Rolle auf, wobei jedoch die Rollen kinematisch alle fest miteinander verkoppelt sind. Eine Schleuse der Vereinzelungsvorrichtung wird durch einen Spalt zwischen der zweiten Vereinzelungsrolle und durch eine Anzahl an Fingern am Kopf einer Schwinge gebildet. Der Spalt weist Dimensionen auf, die einer Breite und einer Höhe von gefüllten handelsüblichen Briefkuverts entspricht. Ein Stapel an Poststücken wird auf die erste Vereinzelungsrolle gelegt. Sobald durch deren Drehung das unterste Poststück des Stapels die erste Vereinzelungsrolle freigibt, wird sofort eine Transportkraft von der ersten Vereinzelungsrolle auf ein zweites unterstes Poststück eingeprägt. Unterschiedliche Formate haben ebenfalls einen Einfluss auf die Vereinzelung. Die Vereinzelungsvorrichtung kann zwar durch ein mechanisches Verstellen bzw. Justieren an andere Formate angepasst werden, jedoch ist keine automatische Anpassung möglich. Mangels einer weiteren Sensorik ist keine Brieflängenmessung und somit auch keine unterschiedliche Ansteuerung für verschiedene Brieflängen möglich. Weitere Nachteile der vorgenannten Vereinzelungsvorrichtung sind, dass keine Lückenüberwachung und somit auch keine Optimierung der Lücken in der Zuführstation möglich sind. Die feste kinematische Kopplung der Antriebsrollen erlaubt keine Abstimmung der Vereinzelungs- und/oder der Transportgeschwindigkeit sowie keine Lückeneinstellung.

Ein Frankiersystem der Francotyp-Postalia GmbH weist eine Zuführstation mit einer Vereinzelungsvorrichtung und mit einer Transportvorrichtung auf, wobei die Zuführstation im Posttransportpfad poststromaufwärts vor einer Frankiermaschine vom Typ Ultimail® angeordnet ist. Die Vereinzelungsvorrichtung der Zuführstation weist im Vorvereinzelungsbereich ein Transportband auf. Ein Antrieb treibt das Transportband und die Transportvorrichtung an, welche antriebmäßig miteinander gekoppelt sind. Ein weiterer Antrieb wirkt auf eine Vereinzelungswalze. Die Schleuse der Vereinzelungsvorrichtung wird durch einen Spalt zwischen der Vereinzelungswalze und durch eine Anzahl an Fingern am Kopf einer Schwinge gebildet, welche über der Vereinzelungswalze angeordnet sind. Empirisch wurde festgestellt, dass die Anforderungen an die Zuverlässigkeit der Vereinzelung bei einem hohen Durchsatz von flachen Gütern nur für ein enges Spektrum, beispielsweise eine bestimmte Sorte an gestapelten Poststücken, mit einer hohen Sicherheit erfüllt werden. Ein angeschrägtes Gehäuse vor dem Spalt führt durch ein kontinuierliches Verengen im Eingangsbereich zum Zusammenpressen der Poststücke im Stapel. Dicke Poststücke lassen sich nicht aus einem Stapel vereinzeln, wenn der Spalt zu schmal eingestellt werden würde, durch welchen ein Poststück geschleust wird. Wird aber der Spalt zu weit eingestellt, dann treten Fehler bei der Vereinzelung auf, insbesondere bei einem hohen Durchsatz von flachen Gütern. Der Durchsatz fällt ebenfalls aufgrund von großen Lücken zwischen den aufeinanderfolgenden Poststücken geringer als möglich aus, insbesondere bei kurzen Poststücken, beispielsweise Postkarten. Sobald durch Drehung des Transportbandes das unterste Poststück die erste Vereinzelungswalze freigibt, wird sofort eine Transportkraft von der ersten Vereinzelungswalze auf ein zweites Poststück eingeprägt. Dadurch kann es ebenso zu Vereinzelungsfehlern kommen. Der Oberflächenreibwert des Transportbands muss sehr exakt auf die Poststückoberfläche abgestimmt sein, damit keine zu starke Vortriebskraft auf das jeweils zweite unterste Poststück des Stapels eingeprägt wird. Die Zuverlässigkeit der Vereinzelung würde erhöht werden, wenn eine Vortriebskraft nur auf das Poststück einwirkt, das vereinzelt und zugeführt werden soll.

Die US2004/0223797 A1 offenbart einen Kopierer dessen Blattstapel von oben vereinzelt wird.

Aus der DE10127993A1 ist eine Vereinzelungsvorrichtung für flache Gegenstände bekannt, die einen Zuführriemen auf angetriebenen Umlenkrollen und Rückhaltemittel aufweist, wobei in letzteren ein Vereinzelungselement enthalten ist, welches mit dem Zuführriemen eine Schleuse bildet, durch welche die vereinzelten flachen Gegenstände der Länge nach transportiert werden. Der Zuführriemen ist als Segmentriemen ausgebildet, der ein Mitnahmesegment und ein Rutschsegment aufweist. Beim Anlegen eines Poststückes oder Stapels an Poststücken werden ein erster und ein zweiter Motor durch eine Steuerung automatisch eingeschaltet, wenn ein erster Sensor das Anlegen detektiert. Der Stapel wird zum Rückhaltemittel der Vereinzelungsmittel transportiert, sobald der erste Motor eingeschaltet ist. Der Stapel wird vereinzelt, indem das unterste Poststück abgezogen wird, wobei der zweite Motor durch die Steuerung entsprechend angesteuert wird. Ein mit der Steuerung elektrisch verbundener Encoder dient zur Erkennung der erreichten Position des Mitnahmesegmentes und sichert via Steuerung die Drehzahlkonstanz des zweiten Antriebes beim Vereinzeln. Der flache Gegenstand kann durch das Antreiben der Rollen einer Auswurfvorrichtung über einen dritten Motor aus der Schleuse herausgezogen und danach aus der Vereinzelungsvorrichtung ausgeworfen werden, wobei der dritte Motor durch die Steuerung angesteuert wird. Trotz eines erheblichen Aufwandes an Motoren, Sensoren und mechanischer Bauteile erlaubt die Vereinzelungsvorrichtung keine Einhaltung einer vorbestimmten Lücke zwischen aufeinander folgenden flachen Gegenständen, insbesondere Poststücken mit verschiedener Dicke.

Ein Frankiersystem verarbeitet verschiedenartiges flaches Gut, wie Postkarten und Briefe des Formats C6, C6 lang, B4 usw. Das unterschiedliche flache Briefgut verlangt in der Zuführstation jedoch verschiedene Verarbeitungsgeschwindigkeiten während der Vereinzelung, wenn die Vereinzelung mit einer hohen Wahrscheinlichkeit gelingen soll. Diese Geschwindigkeiten liegen dann unterhalb der Übergabegeschwindigkeit von der Zuführstation zu einem nachfolgenden Gutverarbeitungsgerät, beispielsweise einer Frankiermaschine. Es entstehen somit unterschiedlich große Lücken zwischen zwei aufeinander folgenden flachen Gütern, die den Durchsatz teilweise erheblich verringern können. Zusätzlich ergeben sich unterschiedlich große Lücken zwischen aufeinanderfolgenden flachen Gütern bei unterschiedlicher Reibung während deren Separation.

Die Aufgabe besteht darin, die Mängel der bekannten Lösungen zu beseitigen. Es soll eine automatische Zuführstation für ein flaches Gut entwickelt werden, die sehr zuverlässig arbeitet und trotz eines Schlupfes zwischen dem Gut und der Vereinzelungsvorrichtung gleichmäßige Lücken zwischen den flachen Gütern erzielt, um einen gleichmäßigen hohen Durchsatz von flachen Gütern zu erreichen.

Die Aufgabe wird mit den Merkmalen der Zuführstation nach dem Patentanspruch 1 gelöst.

Durch die Zuführstation wird flaches Gut einzeln oder aus einem Stapel vereinzelt, einem nachfolgenden Gutverarbeitungsgerät zugeführt. Die Zuführstation weist einen Vereinzelungsbereich und einen Transportbereich auf, wobei der Transportbereich in Transportrichtung stromabwärts des Vereinzelungsbereichs an einem Transportpfad angeordnet ist. Die Zuführstation hat Antriebsmotoren mit zugehörigen Encodern, weitere mechanische Antriebselemente, Sensoren sowie eine Steuereinheit zur Ansteuerung einer Transportvorrichtung. Die Steuereinheit ist eingangsseitig mit einer Anzahl von Sensoren und Encodern schaltungsmäßig verbunden.

Auf dem Transportpfad sind ein erster Wegpunkt W1 orthogonal zu der Position eines zweiten Sensors, ein zweiter Wegpunkt W2 orthogonal zu der Position einer Drehachswelle einer ersten Transportwalze, ein dritter Wegpunkt W3 orthogonal zu der Position eines dritten Sensors und ein vierter Wegpunkt W4 orthogonal zu der Position einer Drehachswelle einer zweiten Transportwalze abbildbar.

Weiter sind ein erster Abstand zwischen dem dritten Wegpunkt W3 und dem vierten Wegpunkt W4 und ein zweiter Abstand zwischen dem vierten Wegpunkt W4 und einem Wegendpunkt Wend vorgesehen, wobei der Wegendpunkt in einem dritten Abstand zu einem nachfolgenden Wegeingangspunkt Win liegt, wobei der Wegeingangspunkt Win auf dem Transportpfad orthogonal zu der Position einer Drehachswelle eines Antriebselements am Eingang des nachfolgenden Gutverarbeitungsgeräts abbildbar ist. Die vorgenannten Abstände sind jeweils konstant. Der erste Abstand ist kleiner als die minimale Länge der zu transportierenden flachen Güter, wobei der erste Abstand größer gleich dem zweiten Abstand ist und der dritte Abstand ist viel kleiner als der zweite Abstand.

Es ist vorgesehen, dass die Zuführstation eine Steuereinheit aufweist, die programmiert ist, eine Transportgeschwindigkeit einer Transportvorrichtung so zu steuern, dass ein am Anfang eines Transportbereichs ermittelter Abstand zwischen den vereinzelten flachen Gütern auf eine Mindestdistanz verringert wird und immer gleich groß ist, wenn diese Güter die Zuführstation verlassen. Die Transportvorrichtung wird durch einen Transportmotor angetrieben.

Die Steuereinheit der Zuführstation weist mindestens ein Ermittlungsmittel zur Bestimmung der Position des flachen Guts im Transportpfad und einen Prozessor auf. Ein Zähler i wird bei laufendem Transportmotor durch die Signale eines Encoders erhöht. Dieser Zähler wird vor jedem Start des Transportmotors wieder auf Null gesetzt. Der aktuelle Zählerstand von i wird gespeichert, wenn ein zu transportierendes Gut die Position eines Sensors erreicht oder verlässt. Die orthogonale Abbildung der Position eines Antriebselements ergibt ebenfalls einen auf dem Transportpfad liegenden Wegpunkt. Die Anordnung der Sensoren und Antriebselemente erfolgt in einem Gestell der Zuführstation in einer Position orthogonal zu dem Transportpfad. Jede orthogonale Abbildung einer Position entspricht einem Wegpunkt auf dem Transportpfad, wobei die Wegpunkte in Transportrichtung in einer Reihe liegen. Erreicht die Vorderkante eines Poststückes die Position eines Sensors, so wird das als Belegen des Sensors bezeichnet. Verlässt die Hinterkante eines Poststückes die Position eines Sensors, so wird das als Freigeben des Sensors bezeichnet.

Da der Zähler bei laufendem Transportmotor immer weiter erhöht wird, sind gespeicherte Zählerstände beim Belegen eines Sensors immer kleiner als beim Freigeben desselben. Der Prozessor ist durch ein in einem Programmspeicher der Steuereinheit gespeichertes Anwendungsprogramm programmiert, die jeweilige Position des aktuell vereinzelten flachen Guts und eines voraus transportierten ersten flachen Guts zu ermitteln sowie eine Anzahl an Parametern zur Erzielung einer kurzzeitig erhöhten Transportgeschwindigkeit eines aktuell vereinzelten flachen Guts zu ermitteln, um eine zu große Lücke am Beginn des Transportbereichs dieser Güter auf einen Mindestabstand zu verringern.

Es wird davon ausgegangen, dass zwischen der Zuführstation und einem nachfolgenden, gutstromabwärts angeordneten Gutverarbeitungsgerät eine vorbestimmte Transportgeschwindigkeit vereinbart wurde, um vereinzelte flache Güter von der Zuführstation an das nachfolgende Gutverarbeitungsgerät, beispielsweise eine Frankiermaschine, zu übergeben. Eine Transportvorrichtung der Zuführstation weist zwei Transportwalzen und einen zwischen den beiden Transportwalzen positionierten Sensor auf, wobei der Sensor in Transportrichtung stromabwärts nahe der ersten Transportwalze angeordnet ist. Nachfolgend wird der Bereich zwischen den beiden Transportwalzen als Transportbereich bezeichnet. Es ist vorgesehen, dass ein erster Abstand A zwischen der orthogonalen Abbildung der Position des vorgenannten Sensors auf einen dritten Wegpunkt und der orthogonalen Abbildung der Position einer Drehachswelle der zweiten Transportwalze auf einen vierten Wegpunkt und dass ein zweiter Abstand B zwischen dem vierten Wegpunkt und einem Wegendpunkt sowie ein dritter Abstand C zwischen dem Wegendpunkt und einem Wegeingangspunkt besteht, auf den die orthogonale Abbildung der Position der Drehachswelle eines Antriebselements des nachfolgenden Gutverarbeitungsgeräts erfolgt. Die Abstände A, B, C sind konstruktionsbedingt konstant und lassen Sie sich jeweils durch eine feste Anzahl an Encoderimpulsen widerspiegeln.

Eine Verbesserung der Lückenkonstanz ist möglich, wenn der Antriebsmotor der Transportvorrichtung - nachfolgend Transportmotor genannt - so angesteuert werden kann, dass eine variable Transportgeschwindigkeit von den vereinzelten flachen Gütern erreicht werden kann, um unterschiedliche Abstände (Lücken) zwischen den vereinzelten flachen Gütern durch die Zuführstation zu kompensieren. Die erhöhte Transportgeschwindigkeit ist von der aktuellen Lückengröße abhängig gewählt und größer, als die vereinbarte vorbestimmte Transportgeschwindigkeit. Der Transportmotor kann zum Transportieren des aktuell vereinzelten flachen Guts erst dann schneller betrieben werden, wenn das voraus transportierte erste flache Gut die zweite Transportwalze der Transportvorrichtung verlassen hat, so dass dessen Weitertransport nicht mehr von der Zuführstation betrieben wird. Deshalb wird von der Steuereinheit der Zuführstation die jeweilige Position des aktuell vereinzelten flachen Guts und des voraus transportierten ersten flachen Guts ermittelt. Die Steuereinheit der Zuführstation berechnet unter Verwendung ausgewählter Zählerstände des Zählers einen Wegstartpunkt und einen Wegendpunkt für das aktuell transportierte flache Gut. Diese bestimmen denjenigen Wegpunkt bei welchem Encoderzählwert der Transportmotor schneller (Wegstartpunkt) bzw. mit normaler Geschwindigkeit (Wegendpunkt) betrieben wird. Sobald die Hinterkante des voraus transportierten ersten flachen Guts den vierten Wegpunkt verlässt, erreicht die Vorderkante des aktuell transportierten flachen Guts den Wegstartpunkt und die erhöhte Transportgeschwindigkeit des Transportmotors kann für das aktuell vereinzelte flache Gut wirksam werden. Und sobald die Vorderkante des durch die Walzen der Transportvorrichtung weiter transportierten flachen Guts den Wegendpunkt erreicht, wird die erhöhte Transportgeschwindigkeit wieder auf die vereinbarte Transportgeschwindigkeit reduziert. Ein Zahlenwert für die erhöhte Transportgeschwindigkeit berechnet sich aus einer Multiplikation eines Zahlenwertes für den Boostzählbereich mit einem Faktor, der sich aus dem Quotienten des Zahlenwerts der vorbestimmten Transportgeschwindigkeit und der Summe von Konstanten für die Mindestdistanz zwischen Gütern und den zweiten Abstand ergibt.

Außerdem können auch solche (virtuellen) Positionen für ein flaches Gut ermittelt werden, die stromabwärts außerhalb der Zuführstation auf dem Transportpfad liegen. Eine Anzahl von Sensoren ist mit der Steuereinheit elektrisch verbunden, welche Signalverarbeitungsmittel für die Signale der Sensoren und Ermittlungsmittel zur Bestimmung der Position des flachen Guts im Transportpfad aufweist. Die Sensoren sind in Transportrichtung nacheinander am Transportpfad angeordnet. Ein erster Sensor ist zur Detektion der Position eines flachen Guts am Anfang eines Vereinzelungsbereichs, ein zweiter Sensor ist zur Detektion der Position eines flachen Guts vor dem Transportbereich an einem ersten Wegpunkt und ein dritter Sensor ist zur Detektion der Position eines flachen Guts innerhalb des Transportbereichs an dem dritten Wegpunkt vorgesehen. Ein Prozessor der Steuereinheit ist durch ein in seinem Programmspeicher gespeichertes Anwendungsprogramm programmiert, dass die Steuereinheit einen Antriebsmotor einer Vereinzelungsvorrichtung - nachfolgend Vereinzelungsmotor genannt - so ansteuert, dass ein flaches Gut aus einem an die Zuführstation gutstromaufwärts angelegten Stapel von Gütern im Vereinzelungsbereich der Zuführstation mit einer vorbestimmten Vereinzelungsgeschwindigkeit vereinzelt wird. Das vereinzelte Gut wird anschließend mittels der Transportvorrichtung weiter transportiert. Bei der Steuerung des Transportmotors wird ein Encoder eingesetzt, welcher in an sich bekannter Weise bereits bei der Geschwindigkeitsregelung des Transportmotors benutzt wird. Auf der Motorachswelle des Transportmotors ist eine Encoderscheibe angeordnet, welche von einer Encoderelektronik abgetastet wird. Die Encodersignale werden den Signalverarbeitungsmitteln zugeführt und bei einem laufenden Transportmotor von dem Zähler des Ermittlungsmittels gezählt. Deren Anzahl spiegelt somit den zurückgelegten Weg des flachen Gutes auf dem Transportpfad wider. Hierbei gilt die Annahme, dass kein Schlupf zwischen Transportwalze und dem zu transportierenden Gut auftritt. Aufgrund der gezählten Encodersignale und der Signale der Sensoren, welche an dem Transportpfad angeordnet sind, ist die Bestimmung der Position des flachen Guts im Transportpfad mittels des Ermittlungsmittels möglich. Jedem flachen Gut im Transportpfad werden beim Belegen und Freigeben (Passieren) des dritten Sensors die jeweilig gezählten Encodersignalzählwerte zugeordnet. Erreicht die Vorderkante eines vereinzelten flachen Guts den dritten Sensor im Transportpfad, wird ermittelt, wie groß der Abstand zwischen diesem und der Hinterkante des ersten flachen Guts ist, das vorher vereinzelt wurde und die Zuführstation stromabwärts verlässt. Der Abstand darf auf einen Minimalabstand reduziert werden, falls der Abstand größer als der Minimalabstand ist. Die Steuereinheit kann zu diesem Zweck programmgesteuert einen Transportmotor einer Transportvorrichtung im Transportbereich der Zuführstation so ansteuern, dass ein vereinzeltes flaches Gut gutstromabwärts mit einer variablen Transportgeschwindigkeit transportiert und danach einem nachfolgenden Gutverarbeitungsgerät mit einer vorbestimmten Transportgeschwindigkeit zugeführt wird. Eine Durchsatzerhöhung bei einem zu großem Abstand ist möglich, wenn der Transportmotor kurzzeitig derart betrieben wird, dass eine höhere Transportgeschwindigkeit erreicht wird, um gleichmäßig kleine Lücken zwischen den vereinzelten flachen Gütern zu erhalten. Ein Encoder liefert die Encodersignale für eine Messgröße, welche auf die Zeit bezogen, den Istwert der Transportgeschwindigkeit repräsentiert. Die Abweichung der Messgröße gegenüber einem Sollwert kann zum Ein-/Ausschalten des Transportmotors und/oder zu dessen Geschwindigkeitsregelung verwendet werden. Eine digitale Regelung mittels eines Prozessors der Steuereinheit der Zuführstation ermöglicht eine Geschwindigkeitsregelung zum Konstanthalten der Transportgeschwindigkeit auf einen beliebigen Wert. Aus den Zählwerten der gezählten Signale eines am Transportmotor angeordneten Encoders kann die Steuereinheit einerseits die Positionen des aktuell sowie des vorherig transportierten flachen Gutes und andererseits die Länge des an den Sensoren vorbei transportierten flachen Guts ermitteln. Von einem Prozessor der Steuereinheit werden beim Passieren der Sensoren die Zählstände den flachen Gütern zugeordnet, wobei die Zählstände der Anzahl der vom Encoder gelieferten Signalen an bestimmten Positionen im Transportpfad entsprechen, welche die Vorderkante bzw. Hinterkante eines flachen Guts erreicht. Das Erreichen und/oder Verlassen dieser Positionen wird von Sensoren detektiert. Die Lücke zwischen den vereinzelten flachen Gütern und die Länge der flachen Güter kann unter Beteiligung des dritten Sensors mittels des Zählers von der Steuereinheit ermittelt werden. Der Zähler kann durch eine Hardware und/oder eine Software realisiert werden.

Der Zähler ist vorzugsweise ein Bestandteil des Ermittlungsmittels zur Bestimmung der Position des flachen Guts im Transportpfad.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:

| Fig. 1, | Perspektivische Darstellung eines Postverarbeitungssystems, mit einer modularen Anlegevorrichtung, einer Zuführstation, einer Frankier-maschine und mit einer Ablagevorrichtung, |
| --- | --- |
| Fig. 2a, | Schematische Darstellung des Transportbereichs während einer ersten Phase des Transports eines Poststückes Pn, |
| Fig. 2b, | Schematische Darstellung des Transportbereichs während einer zweiten Phase des Transports des Poststückes Pn, |
| Fig. 3a, | Seitenansicht des mechanischen Aufbaus der Zuführstation von links, |
| Fig. 3b, | Ansicht des Vereinzelungsbereichs im Gestell von vorn, |
| Fig. 4a, | Blockschaltbild, |
| Fig. 4b, | Darstellung des Prinzips der Zuführung, |
| Fig. 4c, | Geschwindigkeits-/Wegdiagramm für ein flaches Gut, |
| Fig. 4d, | Zeit-/Wegdiagramm für ein flaches Gut, |
| Fig. 5a - 5j, | Darstellung der einzelnen Phasen des Transports von flachem Gut, |
| Fig. 6, | Programmablaufplan, |
| Fig. 7 bis 12, | Unterprogramme zum Programmablaufplan. |

Die Figur 1 zeigt eine perspektivische Darstellung eines Postverarbeitungs-systems, mit einer modularen Anlegevorrichtung 1, einer Zuführstation 2, einer Frankiermaschine als Gutverarbeitungsgerät 3 und mit einer Ablagevorrichtung 4 mit Blick von vorn rechts oben. Die Transportrichtung ist die x-Richtung eines kartesischen Koordinatensystems, dessen y-Richtung zur Rückseite der Geräte des Systems und dessen z-Richtung nach oben weist.

Die Figur 2a zeigt eine schematische Darstellung des Transportbereichs während einer ersten Phase des

EP 2 740 693 B1

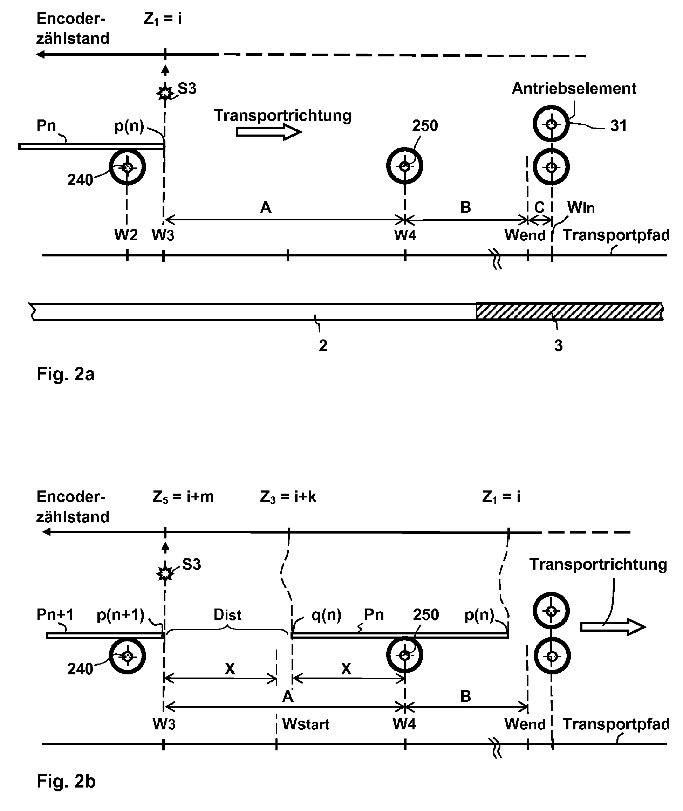

Transports eines Poststückes Pn. Anhand der Figur 2a wird eine Abbildung von Wegpunkten des Transportpfades erläutert. Die Drehachswelle 240 einer ersten Transportwalze ist einem zweiten Wegpunkt W2, ein Sensor S3 ist einem dritten Wegpunkt W3 und die Drehachswelle 250 einer zweiten Transportwalze ist einem vierten Wegpunkt W4 zugeordnet. Die beiden Transportwalzen der Zuführstation 2 werden über die Drehachswellen - in nicht gezeigter Weise - gemeinsam von einem Transportmotor angetrieben, so dass das Poststück Pn in Transportrichtung (weißer Pfeil) transportiert wird. Ein Abstand A liegt zwischen dem dritten Wegpunkt W3 und dem vierten Wegpunkt W4 der zweiten Transportwalze. Ein Abstand B liegt zwischen dem vierten Wegpunkt W4 und einem Wegendpunkt Wend. Eine Drehachswelle eines Antriebselements 31, beispielsweise einer Umlenkrolle eines Transportbandes eines nachfolgenden Gutverarbeitungsgeräts 3, ist eir 13 / 28 ingangspunkt Wln zugeordnet, der auf dem Transportpfad in einem Abstand C nachfolgend dem Wegendpunkt Wend liegt, wobei der Abstand C kleiner als der Radius der Umlenkrolle oder des Antriebselements 31 ist, aber mindestens so groß ist, dass die Position des Wegendpunktes Wend mit der Position Wln auf dem Transportpfad noch nicht übereinstimmt. Die Abstände A, B und C sind jeweils konstant und durch die mechanischen Abmessungen der Zuführstation 2 und des Gutverarbeitungsgeräts 3 vorgegeben, wobei A $\geq$ B >> C ist. Der Abstand zwischen den Drehachswellen 240 und 250 der Transportwalzen entspricht einer minimalen Länge Lmin der zu transportierenden flachen Güter. Der erste Abstand A ist kleiner als Lmin. Ein Zählstand $Z_1 = i$ wird erreicht, wenn die Vorderkante p(n) des ersten Poststücks Pn vom Sensors S3 detektiert wird.

Die Figur 2b zeigt eine schematische Darstellung des Transportbereichs der Zuführstation 2 während einer zweiten Phase des Transports des ersten Poststückes Pn. Der Vorderkante p(n) ist weiterhin der erste Zählstand $Z_1 = i$ zugeordnet, obwohl das Poststück Pn in Transportrichtung (weißer Pfeil) weiter transportiert wurde. Zwischenzeitlich hat auch die Hinterkante q(n) des ersten Poststücks Pn den Detektionsbereich des Sensors S3 verlassen. Es wurden k Encoderimpulse gezählt. Dabei wurde ein weiterer Zählstand $Z_3 = i+k$ erreicht, der nun für die Hinterkante q(n) des ersten Poststücks Pn kennzeichnend ist. Während der zweiten Phase des Transports des Poststückes Pn gelangt die Vorderkante p(n+1) eines nachfolgend vereinzelten Poststücks Pn+1 in den Detektionsbereich des Sensors S3. Dabei wurde ein Zählstand $Z_5 = i+m$ mit m > k erreicht, der nun für die Vorderkante p(n+1) des Poststücks Pn+1 kennzeichnend ist.

Es ist ebenfalls ersichtlich, dass der Transportmotor erst dann mit erhöhter Geschwindigkeit für ein nachfolgendes Poststücks Pn+1 betrieben werden kann, wenn ein erstes Poststück Pn die zweite Transportwalze vollständig verlassen hat. Das ist aber erst dann der Fall, wenn die Hinterkante q(n) des ersten Poststücks Pn um eine Wegstrecke X bis zum vierten Wegpunkt W4 transportiert worden ist. Auch die Vorderkante p(n+1) des nachfolgenden Poststücks Pn+1 wird um die gleiche Wegstrecke X in der gleichen Zeit weiter transportiert, da beide Transportwalzen des Transportbereichs gleich aufgebaut sind und einen gemeinsamen Antrieb aufweisen. Bei einem konstanten Abstand A und einer bekannter Position des ersten Poststücks Pn im Transportpfad kann vorausberechnet werden, bei welchem Zählstand die Vorderkante p(n+1) des Poststücks Pn+1 die Wegstrecke X zurückgelegt haben muss. Bereits zuvor wurde ein Zählstand $Z_3$ des Zählers gespeichert, als die Hinterkante q(n) des ersten Poststücks Pn den dritten Wegpunkt W3 verließ. Zu dem Zählstand $Z_3$ wird vom Prozessor der Steuereinheit ein Zählwert addiert, welcher dem Abstand A entspricht. Wird der so vorausberechnete Zählstand von Zähler erreicht, dann hat die Vorderkante p(n+1) des nachfolgenden Poststücks Pn+1 einen Wegstartpunkt Wstart innerhalb des Transportbereichs erreicht. Die Transportgeschwindigkeit des Poststücks Pn+1 kann nun erhöht werden.

Die erhöhte Transportgeschwindigkeit muss reduziert werden, wenn die Vorderkante p(n+1) des schneller transportierten Poststücks Pn+1 den Wegendpunkt Wend erreicht. Das Poststück würde anderenfalls von Walzen mit unterschiedlicher Geschwindigkeit transportiert und deformiert werden, wenn es das Gutverarbeitungsgerät 3 mit einer erhöhten Transportgeschwindigkeit erreichen würde, weil das Gutverarbeitungsgerät 3 einen eigenen geregelten Antrieb zum Konstanthalten der vorbestimmten Transportgeschwindigkeit besitzt.

Das Gutverarbeitungsgerät 3, welches poststromabwärts von der Zuführstation 2 angeordnet ist, kann beispielsweise eine Frankiermaschine sein. Die Poststücke werden im Transportbereich der Zuführstation 2 durch zwei Transportwalzen transportiert, die auf gemeinsam angetriebenen Drehachswellen 240 und 250 gelagert sind. Ein Sensor S3 ist poststromabwärts der Drehachswelle 240 im Gestell angeordnet. Orthogonal zu der Position dieser Anordnung wird ein dritter Wegpunkt auf dem Transportpfad abgebildet werden. Die Vorder- und Hinterkanten der Poststücke, die den dritten Sensor S3 passieren, werden von diesem detektiert. Dabei wird der jeweilige aktuelle Encoderzählwert für diese Kanten gespeichert. Da der Encoderzähler bei jedem neuen Encodersignal erhöht wird, sind die Encoderzählwerte von der Vorderkante zur Hinterkante eines Poststücks und zu der Vorderkante des unmittelbar nachfolgenden Poststücks Pn+1 ansteigend. Da sich der Encoderzählstand bei laufendem Transportmotor ständig erhöht, kann mit dem aktuellen Encoderzählstand und den gespeicherten Encoderzählständen für die Vorder- bzw. Hinterkanten eines Poststücks die momentane Position dieses Poststücks im Transportpfad bestimmt werden, auch dann noch, wenn das Poststück die Zuführstation längst verlassen hat.

Passiert das erste Poststück Pn den Sensor S3 mit der Vorderkante, wird ein erster Encoderzählerstand $Z_1 = i$ und beim Passieren der Hinterkante wird der Encoderzählerstand $Z_3 = i+k$ gespeichert.

Dem ersten Poststück Pn folgt nun ein aktuelles Poststück Pn+1 nach, welches aktuell durch die Zuführstation vereinzelt wurde. Bis die Vorderkante des aktuell vereinzelten Poststücks Pn+1 den Wegpunkt W3 erreicht, werden weitere Encodersignale des zweiten Encoders EN2 gezählt, was den Zählstand des elektronischen Zählers erhöht. Der Encoderzählstand für die Position der Vorderkante des Poststückes Pn+1 beträgt dann $Z_5$ = i+m.

Die Differenz $\Delta$ zwischen den beiden Zählständen $Z_5$ und $Z_3$ entspricht einem Zählwert Z(Dist), welcher für die aktuelle Lücke Dist bestimmt werden kann, die zwischen den unmittelbar aufeinanderfolgenden Poststücken Pn und Pn+1 ermittelt wurde. Die Differenz ergibt sich zu:

$$Z(Dist) = Z_5 - Z_3 \qquad\qquad (1)$$

Der Wegstartpunkt Wstart wird vom aktuell vereinzelten Poststück Pn+1 erreicht, wenn das erste Poststück Pn den Transportbereich der Zuführstation verlässt. Das erste Poststück wird dann ausschließlich durch das nachfolgende Gutverarbeitungsgerät 3 transportiert. Dadurch kann der Weitertransport des aktuell vereinzelten Poststücks Pn+1 im Transportbereich beschleunigt erfolgen. Ein Zählstand, welcher dem Wegstartpunkt Wstart entspricht, berechnet sich aus:

$$Z(Wstart) = Z_3 + Z(A) \qquad\qquad (2)$$

wobei $Z_3$ = i+k ist und gemessen wird, wenn die Hinterkante des ersten Poststücks Pn den dritten Sensor S3 verlässt. Der Wert k ist proportional der Länge L des Poststücks Pn. Der Zählwert Z(A) entspricht dem Abstand A zwischen dem dritten Sensor S3 und der Drehachswelle 250 der zweiten Transportwalze.

Die erhöhte Transportgeschwindigkeit VTBoost des aktuell vereinzelten Poststücks Pn+1 wird wieder auf den Sollwert VSoll reduziert, wenn die Vorderkante des weiter transportierten Poststücks Pn+1 den Wegendpunkt Wend erreicht. Ein Zählstand, welcher dem Wegendpunkt Wend entspricht, ergibt sich aus:

$$Z(Wend) = Z_5 + Z(A) + Z(B) \qquad\qquad (3)$$

wobei $Z_5$ = i + m ist und gemessen wird, wenn die Vorderkante p(n+1) des aktuell vereinzelten Poststücks Pn+1 den Sensor S3 erreicht. Beide Zählwerte Z(A) und Z(B) sind Konstanten, welche durch den mechanischen Aufbau gegeben sind. Der Zählwert Z(B) entspricht dem Abstand B zwischen der Drehachswelle 250 der zweiten Transportwalze der Zuführstation und einem Wegendpunkt Wend. Dieser liegt vor einer Drehachswelle, beispielsweise einer Umlenkrolle eines Transportbandes am Eingang einer Frankiermaschine. Der Wegeingangspunkt WIn kennzeichnet die Abbildung der Position der Drehachswelle der Umlenkrolle oder eines anderen Antriebselements 31 des nachfolgend angeordneten Geräts auf den Transportpfad.

Ein Boostbereich ist der maximale Bereich in dem Transportpfad, in welchem das aktuell vereinzelte Poststück Pn+1 schneller transportiert werden darf. Er beginnt am Wegstartpunkt und endet am Wegendpunkt. Aus den Gleichungen (2) und (3) ergibt sich dann ein Zahlenwert für den Boostzählbereich:

$$\begin{aligned} ZBoost \quad &= Z(Wend) - Z(Wstart) \\ &= Z_5 + Z(A) + Z(B) - (Z_3 + Z(A)) \\ &= (i+m) - (i+k) + Z(B) \\ &= Z(Dist) + Z(B), \text{ wobei } Z(Dist) \le Z(A) \text{ ist.} \qquad (4) \end{aligned}$$

Dem Zahlenwert Z(Dist) ist eine aktuelle Lücke Dist proportional. Eine Mindestdistanz für die Lücke wurde empirisch ermittelt und darf nicht verringert oder zugeschoben werden. Der Mindestdistanz Dmin der Lücke entspricht wieder ein Zahlenwert Z(Dmin). Eine aktuelle Lücke Dist ist immer eine Distanz zwischen den aufeinanderfolgend vereinzelten Poststücken. Bei einer zu großen aktuellen Lücke ergibt sich eine positive Restdistanz R aus der Differenz zwischen aktueller Lücke und der Mindestdistanz Dmin:

$$R = Dist - Dmin \qquad\qquad (5)$$

Die Restdistanz R gibt an, um welchen Betrag die aktuelle Lücke zwischen den Poststücken geschlossen werden soll. Ein Zahlenwert Z(R) ist der Restdistanz R proportional. Die Höhe der erhöhten Transportgeschwindigkeit VBoost ergibt sich aus:

$$VTBoost = (VTsoll \cdot Boostbereich) / (Boostbereich - R) \qquad (6)$$

mit der Soll-Transportgeschwindigkeit VTsoll, welche für die Übergabe eines Poststückes von der Zuführstation und der Frankiermaschine vereinbart wurde.

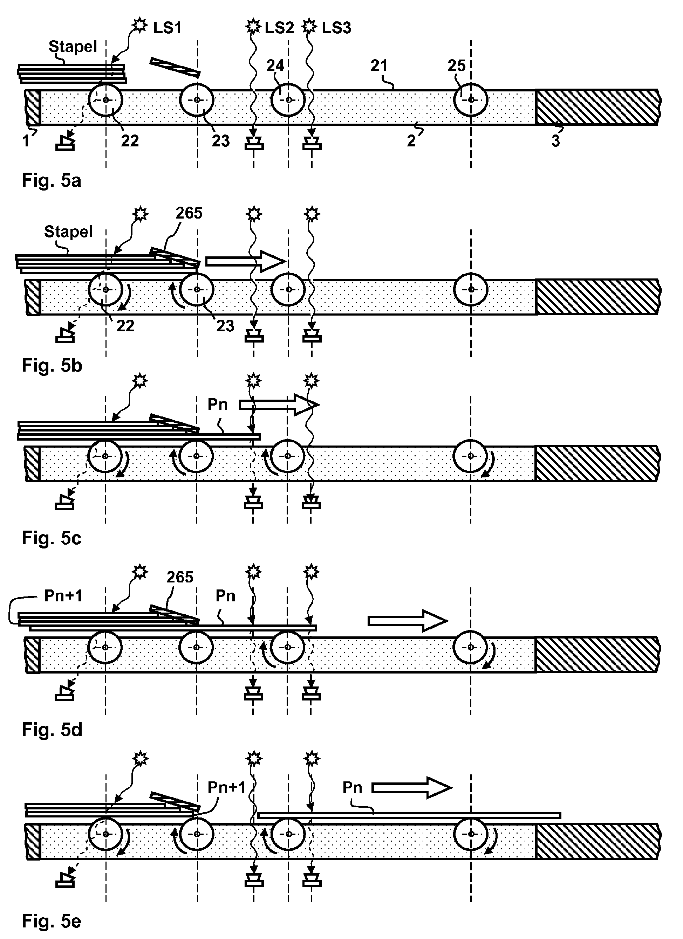

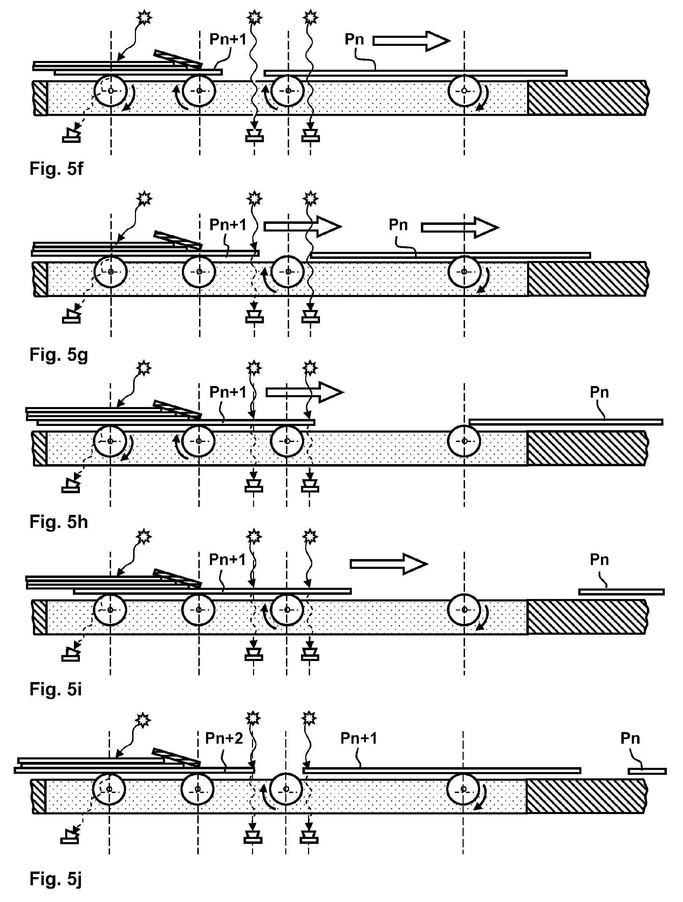

Durch die erhöhte Transportgeschwindigkeit VTBoost wird eine entstandene aktuelle Lücke Dist = Dmin + R auf die Mindestdistanz Dmin verringert (Fig. 5i, j) und der Durchsatz erhöht. Die Höhe der erhöhten Transportgeschwindigkeit VTBoost wird durch einen oberen Maximalwert begrenzt, der durch die Eigenschaften bzw. Parameter der Transportvorrichtung vorgegeben wird. Sowohl die erhöhte Transportgeschwindigkeit VTBoost als auch die Soll-Transportgeschwindigkeit VTsoll lassen sich durch einen Zahlenwert ersetzen. Somit ergibt sich die folgende Gleichung:

$$Z(VTBoost) = Z(VTsoll) \cdot (Z(Dist) + Z(B)) / (Z(Dmin) + Z(R) + Z(B) - Z(R))$$

$$Z(VTBoost) = Z(VTsoll) \cdot (Z(Dist) + Z(B)) / (Z(Dmin) + Z(B))$$

$$Z(VTBoost) = Z(K) \cdot (Z(Dist) + Z(B)) \qquad (7)$$

$$\text{mit } Z(K) = Z(VTsoll) / (Z(Dmin) + Z(B)) = \text{konstant.}$$

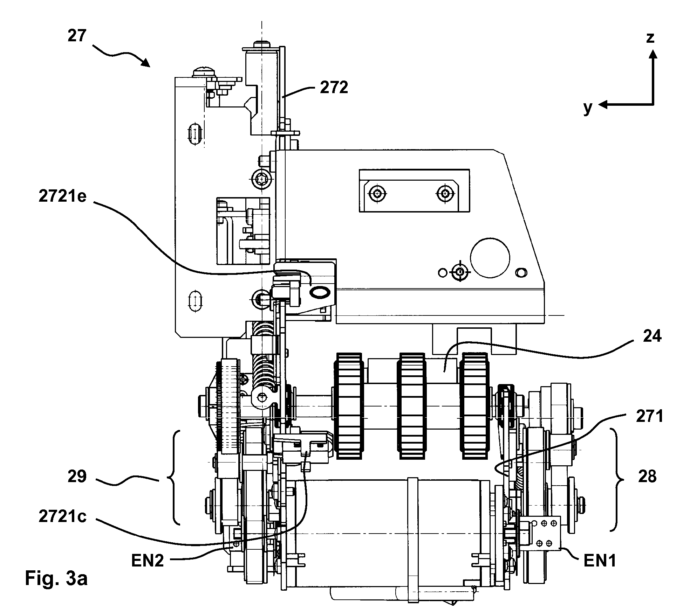

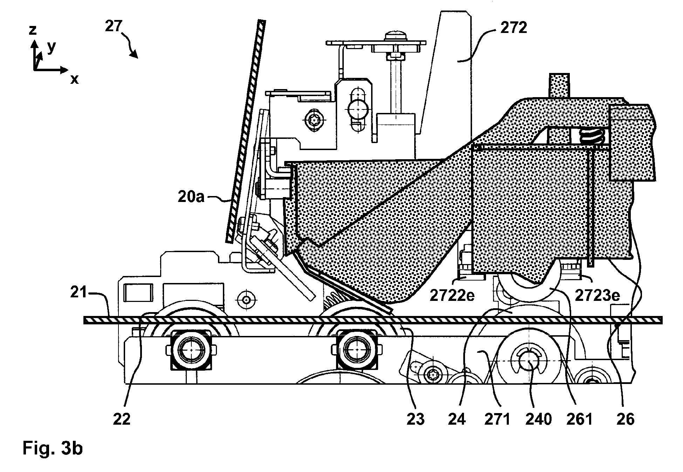

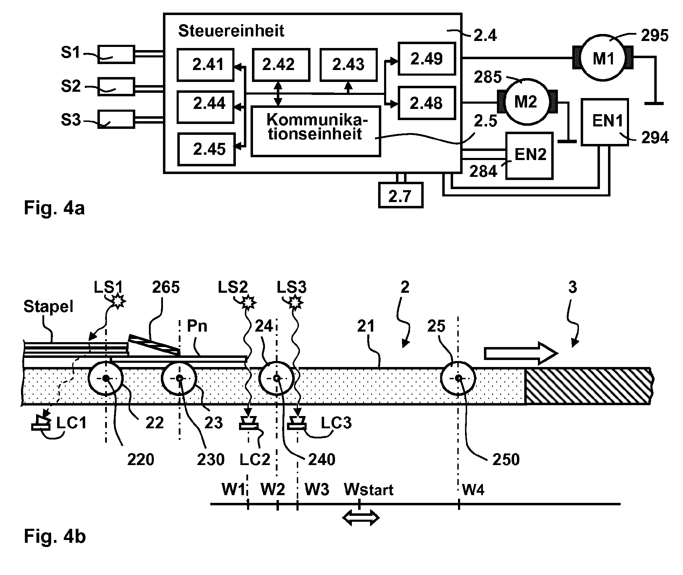

Die Figur 3a zeigt den mechanischen Aufbau und Anordnung von Bauteilen an einem Gestell 27 der Zuführstation in Seitenansicht von links. Die erste Antriebsvorrichtung 29 ist auf der Rückseite der Gestellrückwand 272 angeordnet und wird durch den - in der Fig. 4a gezeigten - Gleichstrommotor 295 angetrieben. Die erste Antriebsvorrichtung 29 treibt die beiden Vereinzelungswalzen an. Die zweite Antriebsvorrichtung 28 ist auf der Vorderseite der Gestellvorderwand 271 angeordnet und treibt die beiden Transportwalzen an. Von der ersten Transportwalze 24 wird die zweite Transportwalze verdeckt. An der Gestellrückwand 272 ist eine Halterung 2721e eines ersten Lichtemitters angebracht. Die Anbringung einer Halterung 2721c eines ersten Lichtcollectors erfolgt ebenfalls an der Gestellrückwand 272. Der Lichtemitter und der Lichtcollector sind Bestandteile einer Lichtschranke, die als ein erster Sensor eingesetzt werden. Ein Encoder EN1 ist auf der Seite der Antriebsvorrichtung 28 angeordnet und detektiert den Antrieb der beiden Vereinzelungswalzen. Ein Encoder EN2 ist auf der Seite der Antriebsvorrichtung 29 angeordnet und detektiert den Antrieb der beiden Transportwalzen. Die Encoder sind in an sich bekannter Weise aufgebaut. Auf jeder Motorachswelle ist eine Encoderscheibe angeordnet, welche von einer Encoderelektronik abgetastet wird. Aus Gründen der besseren Übersichtlichkeit wurden in der Fig. 3a ein Andruckkasten mit der Schwinge und einige Elemente des Gestells bzw. der Antriebsvorrichtung nicht dargestellt, die noch anhand der Fig. 3b erläutert werden.

Die Figur 3b zeigt eine Ansicht des Vereinzelungsbereichs im Gestell von vorn. Ein Stapel von Poststücken wird auf das Zuführdeck 21 gelegt und liegt an der posteingangsseitigen Wand des Gehäuseteils 20a der Zuführstation an. Ein Andruckkasten 26 weist eine erste Andruckwalze 261 auf, welche - in nicht gezeigter Weise - federnd montiert ist und der ersten Transportwalze 24 gegenübersteht. Der Andruckkasten 26 weist poststromabwärts eine nicht gezeigte zweite Andruckwalze auf. Sie ist - in nicht gezeigter Weise - gleichartig aufgebaut, ebenfalls federnd montiert und steht der zweiten Transportwalze (nicht gezeigt) gegenüber. Die Transportwalzen und Vereinzelungswalzen 22 und 23 sind zwischen der Gestellvorderwand 271 und der Gestellrückwand 272 im Gestell 27 angeordnet. An der Gestellrückwand 272 sind eine Halterung 2722e eines zweiten Lichtemitters und eine Halterung 2723e eines dritten Lichtemitters angebracht. Außerdem sind - nicht gezeigte - Halterungen von zugehörigen Lichtcollectoren angebracht. Die Halterungen für einen ersten Sensor sind aus der Fig.3a sichtbar und ebenfalls an der Rückseite der Gestellrückwand 272 montiert. Als erster, zweiter und dritter Sensor werden Lichtschranken eingesetzt. Jeweils ein Lichtemitter und je ein Lichtcollector sind Bestandteil einer Lichtschranke. In der Fig. 4a ist ein Blockschaltbild dargestellt, mit einer Steuereinheit 2.4, die mit den Sensoren S1, S2, S3 und Encodern EN1, EN2 elektrisch sowie mit den Antriebsmotoren M1 und M2 steuerungsmäßig verbunden ist. Die Steuereinheit 2.4 weist einen Prozessor 2.41 zur automatischen Ermittlung von Eingabegrößen, einen Programmspeicher 2.42, ein Speichermittel 2.43 für die automatisch ermittelten und für weitere per Hand eingegebene Eingabegrößen auf. Die Steuereinheit enthält Signalverarbeitungsmittel 2.44 für die Signale der Sensoren und der Encoder EN1, EN2 sowie Ermittlungsmittel 2.45 zur Ermittlung der Position des flachen Guts im Transportpfad. Die vorgenannten Mittel Prozessor 2.41, Signalverarbeitungsmittel 2.44 und Encoder EN2 arbeiten zum Beispiel zusammen, zwecks Drehzahlregelung für den Antriebsmotor M2 der Transportvorrichtung. Der bekannte Zweck der Drehzahlregelung besteht darin, die Drehzahl unabhängig von Schwankungen der Belastung oder der Energiezufuhr konstant zu halten. Somit kann ein bestimmter Sollwert der Transportgeschwindigkeit eingehalten werden. Die vorgenannten Mittel Prozessor 2.41, Signalverarbeitungsmittel 2.44, der dritte Sensor S3 und der Encoder EN2 arbeiten zum Beispiel zusammen, um die Länge L eines Poststücks zu ermitteln. Der dritte Sensor S3 ist vorzugsweise als Lichtschranke ausgebildet. Während des Transportes eines Poststückes wird eine Lichtstrahlunterbrechung mittels des dritten Sensors S3 detektiert, die der Prozessors als Poststückvorderkante interpretiert und ein Zähler des Ermittlungsmittels 2.45 zählt die vom Encoder EN2 gelieferten Impulse. Eine weitere Lichtänderung, die mittels des Sensors S3 detektiert wird, wird vom Prozessor als Hinterkante des Poststücks interpretiert.

Durch Weiterzählen des Zählers ergibt sich anhand des Zählwertes die Position des Poststücks bzw. flachen Guts im Transportpfad. Der Antriebsmotor M2 ist vorzugsweise ein Gleichstrommotor 285, welcher über die Treibereinheit 2.49 der Steuereinheit 2.4 angesteuert wird. Die Signalverarbeitungsmittel und der Prozessor werden zu Mess-, Steuerungs- und Regelungszwecken für den Motor eingesetzt. Eine Lückenmessung basiert beispielsweise auf einem ersten Zählwert der Impulse des Encoders EN2, der erreicht ist, wenn mittels des Prozessors und Sensors S3 die Hinterkante des Poststücks detektiert wird und auf einem zweiten Zählwert der Impulse des Encoders EN2, der erreicht ist, wenn mittels des Prozessors und Sensors S3 die Vorderkante des nachfolgenden Poststücks detektiert wird. Der Zählabstand zwischen den beiden Zählwerten entspricht der aktuellen Lücke Dist zwischen den Poststücken. Die Ermittlung der erhöhten Transportgeschwindigkeit wird vom Prozessor 2.41 nur dann durchgeführt, wenn die aktuelle Lücke Dist größer, als die geforderte Mindestdistanz Dmin ist. Die aktuelle Lücke Dist und/oder die Länge L des flachen Guts bzw. Poststückes kann mit mindestens einem Zähler von der Steuereinheit ermittelt werden. Der mindestens eine Zähler ist beispielsweise ein Bestandteil des Ermittlungsmittels 2.45 zur Bestimmung der Position des Poststückes bei einer Vielzahl von Wegpunkten auf dem Transportpfad.

Die oben genannten Signalverarbeitungsmittel 2.44, Ermittlungsmittel 2.45 und Treibereinheiten 2.49, 2.48 können ein Bestandteil einer Ein/Ausgabeeinheit sein, die mit diskreten Bauelementen realisiert ist.

Alternativ ist vorgesehen, dass ein frei programmierbares Gate Array (FPGA) oder eine anwendungsspezifischen Schaltung (ASIC) zum Einsatz kommen kann. Zum Beispiel könnte die Lückermittlung vom FPGA übernommen werden. Vorzugsweise wird ein FPGA eingesetzt, welches als Ein/Ausgabeeinheit programmiert ist. Eine geeignete programmierbaren Logik ist beispielsweise Spartan-II 3A FPGA der Firma XILINX (www.xilinx.com).

Die Steuereinheit 2.4 weist eine Kommunikationseinheit 2.5 auf, welche über eine Schnittstelle 2.7 - auf eine nicht gezeigte Weise - mit einer Frankiermaschine in Kommunikationsverbindung steht. Alternativ kann die Kommunikationseinheit 2.5 aber auch extern der Steuereinheit 2.4 angeordnet und mit der letzteren kommunikativ verbunden sein (Fig. 4a).

Wenn auch im Ausführungsbeispiel anhand eines Blockschaltbildes die Erfindung verdeutlicht wurde, soll dadurch eine Verwendung eines anderen Blockschaltbildes für eine andere Ausführungsform der Sensoren und/oder der Steuereinheit aber nicht ausgeschlossen werden.

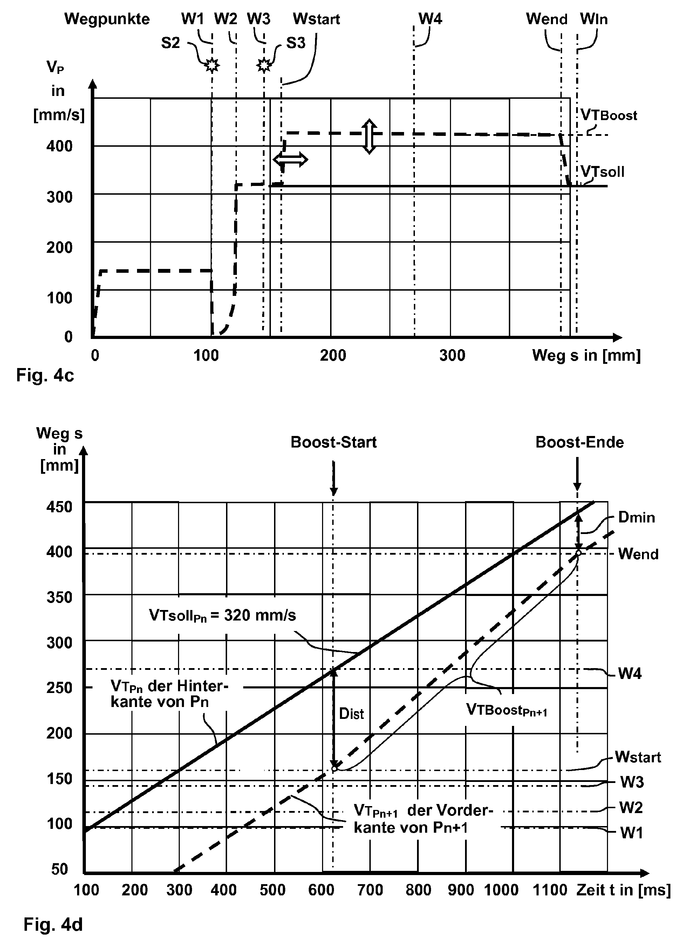

Eine Darstellung des Prinzips der Zuführung geht aus der Fig. 4b hervor. Die Zuführstation 2 weist jeweils zwei auf den Achswellen 220, 230 angeordnete Vereinzelungswalzen 22, 23 und zwei Transportwalzen 24, 25 auf. Letztere sind jeweils zwei auf den Achswellen 240, 250 angeordnet. Die Achswellen 220, 230 und 240, 250 werden - in nicht gezeigter Weise - zu unterschiedlichen Zeiten und mit unterschiedlicher Umdrehungszahl durch die Antriebsmotoren M1 und M2 angetrieben, so dass ein im Stapel unten liegendes Poststück Pn zuverlässig vereinzelt wird. Die Sensoren sind als Lichtschranken ausgebildet. Der erste Sensor besteht aus einem oberhalb des Zuführdecks 21 angeordneten Lichtermittler LS1 und einem unterhalb des Zuführdecks 21 angeordneten Lichtcollector LC1, der über einen Lichtstrahl an den Lichtemitter gekoppelt ist und jede Unterbrechung des Lichtstrahls detektiert. Die Sensoren sind gleich aufgebaut aber im Transportpfad an unterschiedlichen Positionen angeordnet. Ein Spalt ist zwischen dem Anlaufblech 265 und der zweiten Vereinzelungswalze 23 ausgebildet und begrenzt die Dicke des zu vereinzelnen Poststücks. Nach der Vereinzelung wird das Poststück Pn in Transportrichtung (weißer Pfeil) weiter auf der Oberfläche des Zuführdecks 21 entlang des Transportpfades zur Frankiermaschine 3 transportiert. Ein anderes flaches Gut kann ebenso aus einem Stapel vereinzelt und transportiert werden. Der Lichtemitter LS1 liegt poststromabwärts zur Achswelle 220, aber der Lichtcollector LC1 liegt poststromaufwärts zur Achswelle 220. Die Lichtemitter LS2 und LS3 liegen poststromabwärts zur Achswelle 230 und orthogonal den zugehörigen Lichtcollectoren LC2 und LC3 gegenüber. Die zweite Lichtschranke LS2, LC2 ist poststromaufwärts und die dritte Lichtschranke LS3, LC3 ist poststromabwärts der Achswelle 240 der ersten Transportwalze 24 angeordnet. Beide sind orthogonal zum Transportweg angeordnet. Die zugehörigen Wegpunkte W1, W2, W3 und Wstart werden nachfolgend anhand der Figuren 4c und 4d erläutert.

Die Fig. 4c zeigt ein Geschwindigkeits-/Weg-Diagramm für ein beschleunigt transportiertes Poststück. Auf der Abszissenachse ist entlang des Transportpfades ein von der Vorderkante des Poststückes Pn+1 zurückgelegter Weg s in mm eingetragen. Auf der Ordinatenachse ist der Wert der Geschwindigkeit $V_P$ der Vorderkante des Poststückes angegeben. Im Transportpfad folgen nacheinander die Positionen der Baugruppen, Wegpunkt W1 des zweiten Sensors S2, Wegpunkt W2 der Drehachswelle 240 der ersten Transportwalze und Wegpunkt W3 des dritten Sensors S3. Die vorgenannten Wegpunkte liegen mit dem in der Fig. 4b angegebenen Positionen der Baugruppen in einer Flucht, was anhand jeweils einer Strich-Punkt-Linie verdeutlicht wurde. Die gestrichelt gezeichnete Funktionskurve zeigt die Geschwindigkeit $V_P$ der Vorderkante des Poststücks Pn+1 als einen an- und absteigenden Verlauf (beim Stoppen an S2 falls erforderlich) im Transportpfad. Bei einer zu kleinen Lücke erhöht sich durch das Stoppen der Abstand zum vorauseilenden Poststück Pn. Eine zu große Lücke wird durch eine stufenförmig weiter ansteigende Funktionskurve der Geschwindigkeit $V_P$ der Vorderkante des Poststücks Pn+1 auf eine vorbestimmte Mindestdistanz zum ersten Poststück Pn verringert. Die erhöhte Geschwindigkeit wird gestartet, wenn das - nicht gezeigte - erste Poststück die zweite Transportwalze verlässt, wobei die Drehachswelle 250 der zweiten Transportwalze in einer Flucht zum vierten Wegpunkt W4 angeordnet ist. Je größer die Lücke ist, umso mehr wird der Wegstartpunkt vorverlagert und umso höher ist der berechnete Wert für die erhöhte Transportgeschwindigkeit VTBoost. Der Wegendpunkt Wend des Transportpfades liegt vor dem Wegeingangspunkt WIn, an welchem das Poststück Pn+1 von der Zuführstation zur Frankiermaschine mit einer vorbestimmten Transportgeschwindigkeit VTsoll übergeben wird.

Die Darstellung 4d zeigt ein Zeit/Weg-Diagramm mit einem durchgezogenen Verlauf für das Poststück Pn und mit einem gestrichelten Verlauf für das Poststück Pn+1. Das erste Poststück Pn wird mit einer vorbestimmten Transportgeschwindigkeit VTsoll = konstant transportiert. Das zweite Poststück Pn+1 folgt dem ersten Poststück Pn zuerst mit der gleichen Transportgeschwindigkeit mit einem Abstand nach. Die aktuelle Lücke Dist, also der Anfangsabstand der Poststücke wird ermittelt, wenn das Poststück Pn+1 den Sensor S3 am Wegpunkt W3 erreicht. Die Lücke wird solange beibehalten, bis die Hinterkante des ersten Poststücks Pn den vierten Wegpunkt W4 verlässt. Der Beginn einer Geschwindigkeitserhöhung auf $VTBoost_{Pn+1}$ für das Poststück Pn+1 liegt beim Verlassen der zweiten Transportwalze durch das Poststück Pn. Er ist durch einen Knick in der Funktionskurve mit dem gestrichelten Verlauf deutlich zu erkennen. Die aktuelle Lücke Dist wird im weiteren Verlauf auf die Minimallücke Dmin verringert. Die Vorderkante des zweiten Poststücks Pn+1 erreicht dann den vorausberechneten Wegendpunkt.

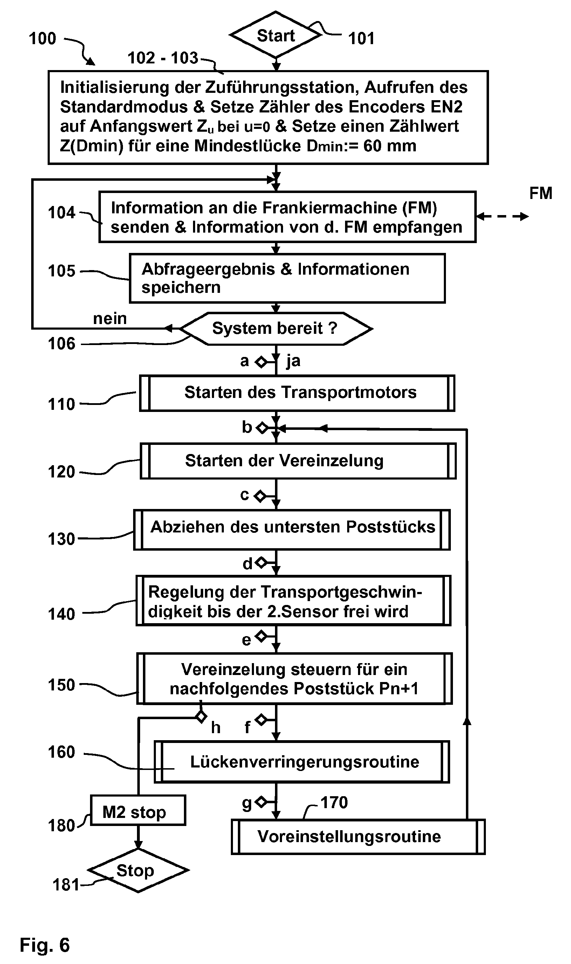

Eine Darstellung der einzelnen Phasen des Transports von Poststücken geht aus den Figuren 5a - 5j hervor, die in Verbindung mit Fig. 6 erläutert werden.

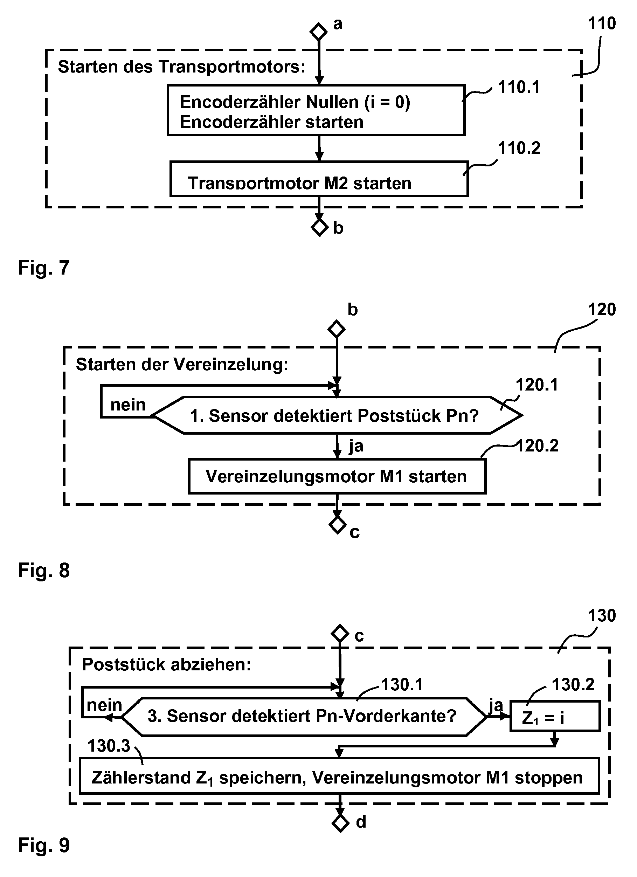

In der Fig. 6 ist ein Programmablaufplan für einen Prozessor der Steuereinheit und in den Figuren 7 bis 12 sind Unterprogramme zum Programmablaufplan dargestellt. Der Programmablaufplan 100 nach Fig. 6 sieht nach einem Start-schritt 101 die Schritte 102 - 103 zur Initialisierung der Zuführstation vor. Es ist vorgesehen, dass der Prozessor der Steuereinheit programmiert ist, nach einer Initialisierung ein zugehöriges Anwenderprogramm und Anfangsparameter zu laden, um anschließend einen Standardmodus aufzurufen, in welchem die Zuführstation arbeiten kann. Die Anfangsparameter sind mindestens Sollwerte für:

- die erste vorbestimmte Transportgeschwindigkeit,
- den minimalen Abstand der Poststücke voneinander bzw. den minimalen Abstand der Vorderkanten aufeinanderfolgender Poststücke voneinander.

Ein Stapel an Poststücken wird im Vorvereinzelungsbereich auf das Zuführdeck und die erste Vereinzelungswalze 22 der Zuführstation 2 gelegt (siehe Fig. 5a).

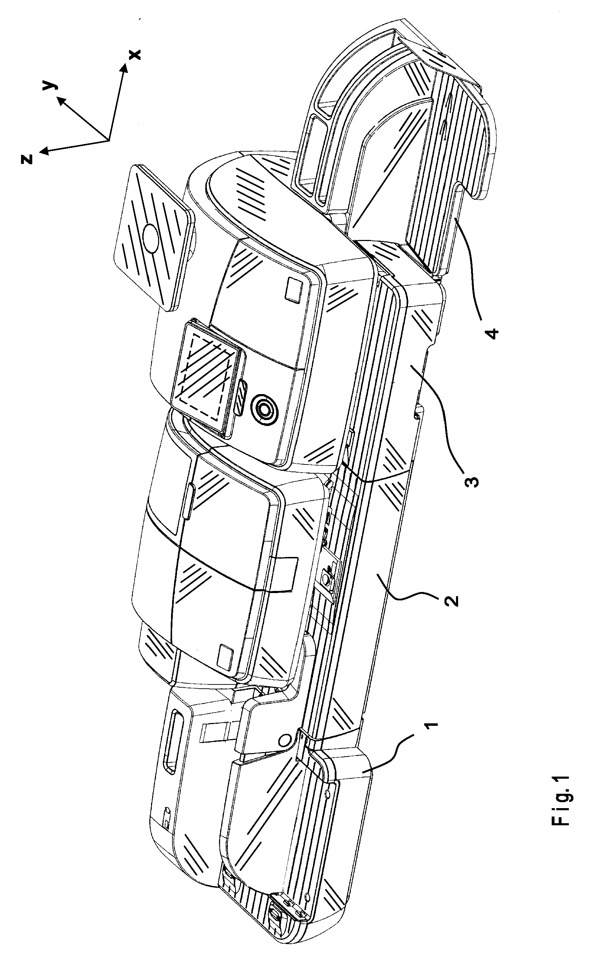

Der Programmablaufplan nach Fig. 6 sieht im Schritt 104 vor, Informationen an die Frankiermaschine zu senden und Informationen von der Frankiermaschine zu empfangen. Das setzt natürlich voraus, dass das gesamte System (ersichtlich in Fig. 1) eingeschaltet ist. Die Frankiermaschine wartet im Bereitschaftsmodus, nachdem das System gestartet worden ist. Eine von der Frankiermaschine zur Zuführstation gesendete Information wird von der letzteren empfangen, erkannt und im Schritt 105 gespeichert.

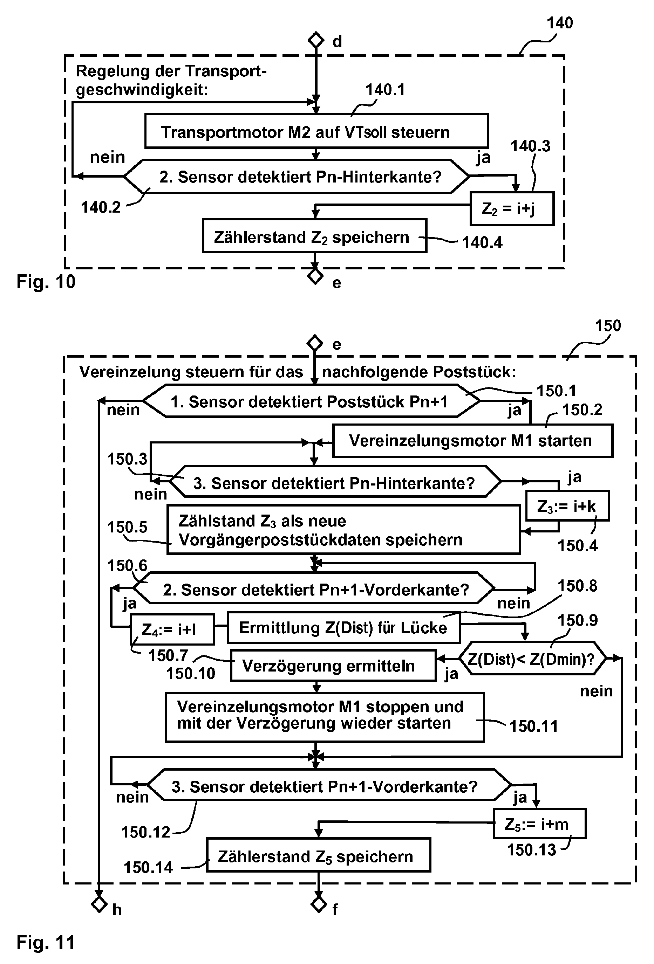

Nun wird zum Schritt 104 zurückverzweigt, wenn das System noch nicht bereit ist. Anderenfalls wird auf das Unterprogramm 110 (siehe Fig. 7). verzweigt, in welchem der Encoderzähler zurückgesetzt und dann neu gestartet wird (Schritt 110.1), worauf folgend der Transport gestartet wird (Schritt 110.2). Anschließend wird das Unterprogramm 120 und somit die Vereinzelung gestartet (siehe Fig. 5b und Fig. 7), wenn der erste Sensor ein Poststück Pn detektiert (Schritt 120.1) wird der Vereinzelungsmotor M1 angesteuert (Schritt 120.2). In dem nachfolgenden Unterprogramm 130 wird im Schritt 130.1 (Fig.9) abgefragt, ob durch den dritten Sensor bereits detektiert wurde, dass die Vorderkante p(n) des ersten Poststücks Pn in dessen Detektionsbereich gelangt ist. Ein Schritt 130.2 folgt, wenn dies der Fall ist. Aus dem Schritt 130.2 geht die Ermittlung des ersten Zählstandes $Z_1 = i$ (siehe Fig.2a) hervor. Der Wert des ersten Zählstandes $Z_1$ wird im Schritt 130.3 des Unterprogramms 130 - in nicht gezeigter Weise - nichtflüchtig in einem Speichermittel einer Steuereinheit der Zuführstation gespeichert. Im Schritt 130.3 wird außerdem die Vereinzelung gestoppt (siehe Fig. 5d und Fig. 9). Das im Poststapel ganz unten liegende Poststück kann nun durch die Drehung der ersten Transportwalze vom Poststapel abgezogen werden, wobei ein Freilauf der Vereinzelungswalzen wirksam ist. Anschließend wird auf das Unterprogramm 140 (Fig.10) verzweigt.

Im Unterprogramm 140 erfolgt eine Regelung der Transportgeschwindigkeit auf den ersten vorbestimmten Sollwert für das Poststück Pn (siehe Fig. 5e und Schritt 140.1 in Fig.10), solange das Poststück Pn unter dem zweiten Sensor weiter transportiert wird. Ein weiterer Zählwert liegt vor, sobald die Hinterkante des Poststücks Pn den vom zweiten Sensor detektierten Bereich verlässt. Dieser Wert wird als zweiter Zählstand $Z_2 = i+j$ ermittelt. In einem späteren nicht gezeigten weiteren Schritt kann beispielsweise aus den Zählstanden $Z_1$ und $Z_2$ die Länge L des Poststückes Pn ermittelt werden. Der Wert des zweiten Zählstandes $Z_2$ wird im Schritt 140.4 des Unterprogramms 140 - in nicht gezeigter Weise - nichtflüchtig in dem Speichermittel einer Steuereinheit der Zuführstation gespeichert.

Im danach folgenden Unterprogramm 150 kann eine Vereinzelung des nachfolgenden Poststücks Pn+1 gesteuert werden (siehe Fig. 5f und Fig. 11), solange noch ein weiteres Poststück Pn+1 an der Zuführstation anliegt, was im Schritt 150.1 abgefragt wird. Wenn aber die Abfrage im Schritt 150.1 ergibt, dass ein weiteres Poststück Pn+1 an der Zuführstation anliegt, wird der Vereinzelungsmotor M1 wieder gestartet (Schritt 150.2) und nach einem Durchlaufen der Schritte 150.3 - 150.14 (siehe Fig. 11) wird ein Punkt f erreicht. Falls jedoch kein weiteres Poststück Pn+1 an der Zuführstation anliegt, dann wird ein Punkt h erreicht, zum Schritt 180 verzweigt und der Transportmotor M2 wird abgeschaltet, wenn sich keine Poststücke mehr im Transportbereich befinden.

Nachfolgend wird ein Stopp-Schritt 181 erreicht, der die Routine 100 beendet.

Im Unterprogramm 150 wird ein weiterer Zählstand des Encoderzählers ermittelt, wenn der dritte Sensor die Pn-Hinterkante detektiert, was im Schritt 150.3 abgefragt wird. Im folgenden Schritt 150.4 wird ein dritter Zählstand $Z_3$ gebildet. Der Wert des dritten Zählstandes $Z_3$ = i+k gilt als Vorgängerpoststückdatum (siehe auch Fig. 2b) und wird im Schritt 150.5 nichtflüchtig im Speichermittel 2.43 der Steuereinheit 2.4 gespeichert.

Im Unterprogramm 150 wird auch der Vereinzelungsmotor M1 gestoppt und mit Verzögerung wieder gestartet, wenn der zweite Sensor die Vorderkante des nachfolgenden Poststücks Pn+1 detektiert und eine Lücke Dist < Dmin ermittelt worden ist (siehe Fig. 5g und Fig. 11). Die Verzögerung wird so berechnet, dass die Mindestdistanz erreicht oder überschritten wird. Der Prozessor kann die Verzögerung aufgrund der vorliegenden Encoderzählstände und der bekannten Transportgeschwindigkeit berechnen. Im Schritt 150.7 wird der Zählstand $Z_4$ aus $Z_4$ = i+I ermittelt.

Wenn beim Durchlaufen der Schritte des Unterprogramms 150 im Schritt 150.12 festgestellt wird, dass der dritte Sensor die Vorderkante des aktuellen Poststücks Pn+1 detektiert, dann liegt ein Wert i+m als Zählstand $Z_5$ vor (Fig.2b), der als aktuelles Poststückdatum gespeichert wird. Im Schritt 150.13 wird der Zählstand $Z_5$ ermittelt. Ein Zahlenwert für die aktuelle Lücke Dist ergibt sich aus der Differenz $Z_5 - Z_3$ = Z(Dist) entsprechend der Gleichung (1), welche bei der Berechnung von Boostparametern in der Lückenverringerungsroutine 160 Anwendung findet.

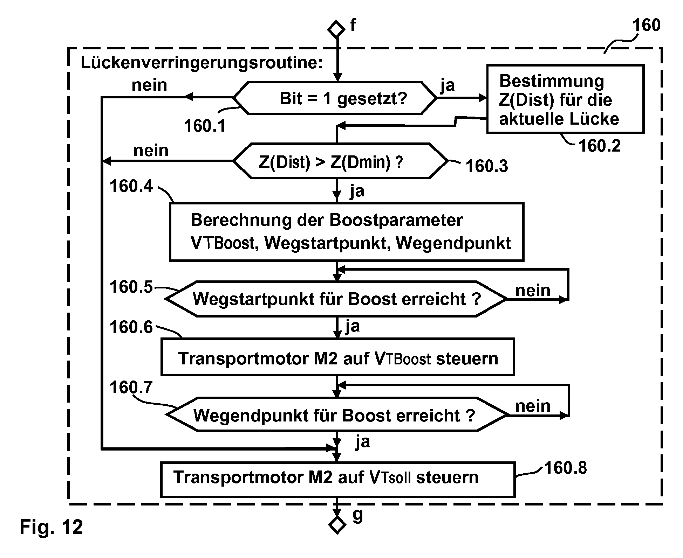

Anhand der Figur 12 wird die Lückenverringerungsroutine 160 erläutert. Diese kann auch durch ein Bit abgeschaltet werden. In einem ersten Abfrageschritt 160.1 wird geprüft, ob ein Bit auf den Wert 1 gesetzt ist. Auf einen achten Schritt 160.8 wird verzweigt, wenn das Bit nicht auf den Wert 1 gesetzt ist. Wenn doch das Bit auf den Wert 1 gesetzt ist, dann erfolgt eine Durchführung der Lückenverringerungsroutine und ein zweiter Schritt 160.2 wird erreicht, in welchem eine Lückenmessung unter Beteiligung des dritten Sensors S3 durchgeführt wird, deren Prinzip bereits unter der Figur 2b erläutert wurde. Dann wird ein Abfrageschritt 160.3 erreicht, in welchem anhand von Zahlenwerten geprüft wird, ob die eingestellte Mindestweglücke Dmin kleiner als die aktuell gemessene Lücke Dist zwischen zwei aufeinanderfolgenden Poststücken ist. Wenn ja, also die Mindestweglücke überschritten wurde, dann werden im folgenden Schritt 160.4 die Boost-Parameter vom Prozessor berechnet. Das Prinzip der Boost-Parameter-Berechnung wurde bereits anhand der Figur 2b erläutert. Wenn nein, also die Mindestweglücke nicht überschritten wurde, dann wird wieder auf den achten Schritt 160.8 verzweigt.

Nachdem die Boost-Parameter vom Prozessor berechnet wurden, wird ein Abfrageschritt 160.5 erreicht, in welchem geprüft wird, ob von der Hinterkante des Poststücks Pn (Vorgänger) ein Wegpunkt W4 erreicht wurde. Dann hat die Vorderkante des aktuell vereinzelten Poststücks Pn+1 den Wegstartpunkt erreicht und der Boost für eine erhöhte Transportgeschwindigkeit des aktuell vereinzelten Poststücks Pn+1 kann gestartet werden. Wenn das aber nicht der Fall ist, dann wird in einer Warteschleife auf das Ereignis gewartet, dass der Wegstartpunkt erreicht wurde. Wenn das aber der Fall ist, dann wird der Antriebmotor M2 der Transportvorrichtung im Schritt 160.6 angesteuert, um die erhöhte Transportgeschwindigkeit VBoost zu erreichen. In einem anschließenden Abfrageschritt 160.7 wird geprüft, ob vom aktuellen Poststück Pn+1 ein Wegendpunkt erreicht wurde. Wenn das aber nicht der Fall ist, dann wird in einer Warteschleife auf das Ereignis gewartet, dass vom aktuellen Poststück Pn+1 der Wegendpunkt erreicht wurde. Wenn das aber der Fall ist, dann wird der achte Schritt 160.8 erreicht. Der Antriebsmotor M2 der Transportvorrichtung wird im achten Schritt 160.8 angesteuert, um die Soll-Transportgeschwindigkeit VTsoll zu erreichen und konstant zu halten. Anschließend wird auf den Punkt g verzweigt. Aufgrund der Lückenverringerungsroutine 160 (Fig. 12) wird der eingestellte Mindestabstand zwischen zwei aufeinander folgenden Poststücken, beispielsweise von ca. 60 mm auch dann erreicht, wenn beim Transport von Poststücken ein Schlupf entsteht.

Danach wird ein Punkt g und damit ein Beginn eines weiteren Unterprogramms 170 erreicht, welches zur automatischen Voreinstellung der Steuereinheit eingesetzt wird, um den gewünschten Durchsatz an Poststücken bei maximaler Vereinzelungssicherheit zu erzielen.

Vom Schritt 170 wird zum Punkt b verzweigt und die Routine mit den Schritten 120 bis 170 wiederholt sich für ein nachfolgendes Poststück. In der Figur 5i ist eine Phase gezeigt, in welcher das nachfolgende Poststück Pn+1 vom Stapel abgezogen wird. Dabei gelten die vorstehend genannten Sollwerte. Von der Transportvorrichtung wird das Poststück Pn+1 transportiert, ähnlich wie das in der Figur 5f für das Poststück Pn gezeigt wurde. Dann wird zusätzlich der Stapel weiter vereinzelt, wobei die Vorderkante eines nachfolgenden Poststücks Pn+2 bis zum zweiten Sensor S2 von der Vereinzelungsvorrichtung transportiert wird (Fig. 5j, Fig. 11). Aufgrund einer Routine 150 wird die Mindestweglücke, beispielsweise 60 mm, zwischen zwei aufeinander folgenden Poststücken erreicht.

Es ist vorgesehen, dass der zweite Sensor S2 gutstromaufwärts und der dritte Sensor S3 gutstromabwärts der ersten Transportwalze 24 am Transportpfad angeordnet ist und dass der Abstand D zwischen benachbarten flachen Gütern und/oder die Länge L des flachen Guts unter Beteiligung eines der beiden Sensoren S2, S3 von der Steuereinheit 2.4 ermittelt werden. Alternativ kann die Lücke zwischen Poststücken und/oder die Länge L der Poststücke mittels einer Vielzahl an Zählern von der Steuereinheit und unter Beteiligung eines oder mehrerer Sensoren, die im Transportpfad angeordnet sind, ermittelt werden.

Alternativ kann der Wegstartpunkt unveränderbar vor dem vierten Wegpunkt W4 festgelegt werden. Die Hinterkante des ersten Poststücks hat den vierten Weg-punkt W4 mit Sicherheit passiert, wenn die Vorderkante des aktuell transportierten Poststücks den Wegstartpunkt bei einem Zählstand Z(Wstart) = Z3 + Z(U) mit U ≥ A erreicht. Je größer die Lücke ist, umso höher muss der berechnete Wert für die erhöhte Transportgeschwindigkeit VTBoost sein, aber ohne dass der Wegstartpunkt vorverlagert wird. Der Wegendpunkt Wend des Transportpfades liegt weiterhin vor dem Wegeingangspunkt WIn.

Dadurch dass in dem vorstehenden Beispiel von Poststücken bzw. Briefen gesprochen wird, sollen aber andere flache Güter nicht ausgeschlossen werden, die stapelbar sind und vereinzelt werden sollen.

## Patentansprüche

1.  Zuführstation, zum Zuführen eines flachen Guts, welches einzeln oder aus einem Stapel von unten vereinzelt, einem nachfolgenden Gutverarbeitungsgerät (3) zugeführt wird, mit einem Vereinzelungsbereich und mit einem Transportbereich, wobei der Transportbereich in Transportrichtung stromabwärts des Vereinzelungsbereichs an einem Transportpfad angeordnet ist, wobei die Zuführstation (2) Antriebsmotoren mit zugehörigen Encodern, weitere mechanische Antriebselemente, Sensoren sowie eine Steuereinheit zur Ansteuerung einer Transportvorrichtung umfasst und wobei die Steuereinheit (2.4) eingangsseitig mit einer Anzahl von Sensoren (S1, S2, S3) und Encodern schaltungsmäßig verbunden ist,
    **gekennzeichnet dadurch,**

    - **dass** die Anordnung der Sensoren und Antriebselemente in einem Gestell (27) der Zuführstation (2) in jeweils einer Position orthogonal zu dem Transportpfad erfolgt, so dass die orthogonale Abbildung jeder Position jeweils einem Wegpunkt auf dem Transportpfad entspricht und dass die Wegpunkte in Transportrichtung in einer Reihe liegen,
    - **dass** auf dem Transportpfad ein erster Wegpunkt (W1) orthogonal zu der Position eines zweiten Sensors (S2), ein zweiter Wegpunkt (W2) orthogonal zu der Position einer Drehachswelle (240) einer ersten Transportwalze (24), ein dritter Wegpunkt (W3) orthogonal zu der Position eines dritten Sensors (S3) und ein vierter Wegpunkt (W4) orthogonal zu der Position einer Drehachswelle (250) einer zweiten Transportwalze (25) abbildbar sind,
    - **dass** ein erster Abstand (A) zwischen dem dritten Wegpunkt (W3) und dem vierten Wegpunkt (W4) und dass ein zweiter Abstand (B) zwischen dem vierten Wegpunkt (W4) und einem Wegendpunkt (Wend) vorgesehen ist, der in einem dritten Abstand (C) zu einem nachfolgenden Wegeingangspunkt (WIn) liegt, wobei der Wegeingangspunkt (WIn) auf dem Transportpfad orthogonal zu der Position einer Drehachswelle eines Antriebselements (31) am Eingang des nachfolgenden Gutverarbeitungsgeräts (3) abbildbar ist,
    - **dass** die Abstände (A, B, C) jeweils konstant sind, dass der erste Abstand (A) kleiner als die minimale Länge (Lmin) der zu transportierenden flachen Güter ist, wobei der erste Abstand (A) größer gleich dem zweiten Abstand (B) ist und dass der Abstand (C) viel kleiner als der zweite Abstand (B) ist sowie
    - **dass** die Steuereinheit (2.4) der Zuführstation programmiert ist, die Transportgeschwindigkeit der Transportvorrichtung so zu steuern, dass ein am Anfang des Transportbereichs ermittelter Abstand (D) zwischen den vereinzelten flachen Gütern auf eine Mindestdistanz (Dmin) verringert wird und immer gleich groß ist, wenn diese die Zuführstation verlassen, wobei die Steuereinheit (2.4) i)

        mindestens ein Ermittlungsmittel (2.45) zur Ermittlung der Position des flachen Guts im Transportpfad und einen Prozessor (2.41) aufweist, wobei der Prozessor unter Beteiligung eines der Sensoren (S2, S3) mittels eines Zählers und eines Encoders (EN2) der Transportvorrichtung Zählwerte ermittelt und speichert, wobei die Zählwerte jeweils einer Anzahl an Encoderimpulsen entsprechen, wobei jeweils ein Zählstand erreicht wird, wenn ein flaches Gut an mindestens einen ausgewählten Wegpunkt eines Transportpfades gelangt, wobei ein Zahlenwert Z(D) dem Abstand (D) zwischen den vereinzelten flachen Gütern entspricht und wobei der Prozessor (2.41) durch ein in einem Programmspeicher (2.42) der Steuereinheit (2.4) gespeichertes Anwendungsprogramm programmiert ist,

> • die jeweilige Position des aktuell vereinzelten flachen Guts und des voraus transportierten flachen Guts sowie den Abstand (D) zwischen der Vorderkante des aktuell vereinzelten flachen Guts und der Hinterkante des voraus transportierten flachen Guts rechnerisch zu ermitteln,
> • eine Anzahl an Boostzähl-Parametern (Z(VTBoost), Z(Wstart), Z(Wend)) zur kurzzeitigen Erzielung von einer erhöhten Transportgeschwindigkeit (VTBoost) des aktuell vereinzelten flachen Guts in einem Boostzählbereich (ZBoost) zu errechnen, in welchem der ermittelte Abstand (D) auf einen Mindestabstand (Dmin) zwischen den aufeinanderfolgend vereinzelten Gütern zu verringert wird, wobei sich ein Boostzählbereich (ZBoost) aus der Summe des Zahlenwertes (Z(D)) für den Abstand (D) und einem festen Zahlenwert (Z(B)) für den zweiten Abstand (B) ergibt, wobei $Z(D) \leq Z(A)$ ist und wobei zwischen der Zuführstation (2) und einem nachfolgenden Gutverarbeitungsgerät (3) eine vorbestimmte Transportgeschwindigkeit (VTsoll) vereinbart wurde, um vereinzelte flache Güter von der Zuführstation (2) an das nachfolgende Gutverarbeitungsgerät (3) zu übergeben, wobei der vorbestimmten Transportgeschwindigkeit (VTsoll) ein fester Zählwert (Z(VTsoll)) entspricht, und wobei die erhöhte Transportgeschwindigkeit (VTBoost) größer ist, als die vereinbarte vorbestimmte Transportgeschwindigkeit (VTsoll), wobei der Boostzählparameter (Z(Wstart)) für einen Wegstartpunkt (Wstart) und der Boostzählparameter (Z(Wend)) für einen Wegendpunkt (Wend) errechnet wird,

> ii) ausgangsseitig mit einem Antriebsmotor (M2) der Transportvorrichtung verbunden ist, welche ein aktuell vereinzeltes flaches Gut mit der erhöhten Transportgeschwindigkeit (VTBoost) stromabwärts transportiert, nachdem der Zählstand des Zählers den voraus berechneten Zählstand (Z(Wstart)) für den Wegstartpunkt erreicht hat, wobei die erhöhte Transportgeschwindigkeit solange aufrechterhalten wird, bis der Zählstand des Zählers den voraus berechneten Zählstand (Z(Wend)) für den Wegendpunkt (Wend) erreicht, wobei zur Erzielung der erhöhten Transportgeschwindigkeit ein Zahlenwert (Z(VTBoost)) aus der Multiplikation des Boostzählbereichs (ZBoost) mit einem Faktor (Z(K)) ermittelt wird.

2. Zuführstation, nach Anspruch 1, **gekennzeichnet dadurch, dass** der Zahlenwert (Z(D)) ein Zahlenwert (Z(Dist)) ist, der für eine aktuelle Lücke (Dist) am Anfang des Transportbereichs ermittelt wird sowie dass sich der Faktor (Z(K)) als Zahlenwert aus dem Quotienten eines Zahlenwerts (Z(VTsoll)) für die vereinbarte vorbestimmte Transportgeschwindigkeit (VTsoll) und der Summe eines Zahlenwerts (Z(Dmin)) für die Mindestdistanz (Dmin) und eines Zahlenwerts (Z(B)) für den zweiten Abstand (B) ergibt.

3. Zuführstation, nach Anspruch 1, **gekennzeichnet dadurch, dass** die Steuereinheit einen Prozessor (2.41) und ein Signalverarbeitungsmittel (2.44) für die Signale der Sensoren und des Encoders (EN2) aufweist, welche mit dem Ermittlungsmittel (2.45) zusammenarbeiten.

4. Zuführstation, nach Anspruch 1, **gekennzeichnet dadurch, dass** der dritte Abstand (C) mindestens so groß gewählt ist, so dass die Position des Wegendpunktes (Wend) mit der Position (Wln) auf dem Transportpfad noch nicht übereinstimmt.

5. Zuführstation, nach Anspruch 1, **gekennzeichnet dadurch, dass** das flache Gut ein Poststück ist und dass mindestens ein Zähler ein Bestandteil des Ermittlungsmittel (2.45) ist und zur Ermittlung der Position des Poststückes bei einer Vielzahl von Wegpunkten auf dem Transportpfad ausgebildet ist, dass die Ermittlung durch den Prozessor (2.41) über den Zählstand des mindestens einen Zählers des Ermittlungsmittels (2.45) erfolgt, wobei dem Wegstartpunkt (Wstart) ein Zählstand des Zählers zugeordnet ist, der sich aus der Summe eines Zahlenwertes Z(A) für den Abstand (A) und einem Zählstand ($Z_3$) ergibt, der gemessen wird, wenn die Hinterkante (q(n)) eines ersten Poststücks (Pn) den dritten Sensor (S3) verlässt und wobei dem Wegendpunkt (Wend) ein Zählstand des Zählers zugeordnet ist, der sich aus der Summe des Zahlenwertes für den Abstand (A), eines Zahlenwertes für einen Abstand (B) und einem Zählstand ($Z_5$) ergibt, der gemessen wird, wenn die Vorderkante (p(n+1)) des aktuell vereinzelten Poststücks (Pn+1) den Sensor (S3) erreicht.

6. Zuführstation, nach den Ansprüchen 1 bis 5, **gekennzeichnet dadurch, dass** die Transportvorrichtung so ausgebildet ist, dass aufeinanderfolgende Poststücke (Pn) und (Pn+1) den dritten Sensor (S3) passieren, wobei vom Prozessor (2.41) beim Passieren des dritten Sensors Zählstände des Zählers ermittelt werden und eine Differenz ($\Delta$) zwischen zwei Zählständen ($Z_5$ und $Z_3$) bestimmt wird, welche einem Zahlenwert ($Z(Dist) = Z_5 - Z_3$) entspricht, welcher für die aktuellen Lücke (Dist) bestimmt werden kann, die am Anfang des Transportbereichs zwischen den unmittelbar aufeinanderfolgenden Poststücken (Pn) und (Pn+1) besteht, dass die Ermittlung der erhöhten Transportgeschwindigkeit vom Prozessor (2.41) nur dann durchgeführt wird, wenn die aktuelle Lücke (Dist) größer als die geforderte Mindestdistanz (Dmin) ist, und dass der Boostzählbereich für einen Transport des Poststückes (Pn+1) mit der erhöhten Transportgeschwindigkeit vom Prozessor (2.41) ermittelt wird, wenn festgestellt wurde, dass der dritte Sensor die Vorderkante des nachfolgenden Poststücks (Pn+1) detektiert, wobei sich der zum Boostzählbereich zugehörige Boostbereich von dem Wegstartpunkt (Wstart) zum Wegendpunkt (Wend) auf dem Transportpfad erstreckt.

**7.** Zuführstation, nach Anspruch 1, **gekennzeichnet dadurch, dass** der zweite Sensor (S2) gutstromaufwärts und der dritte Sensor (S3) gutstromabwärts der ersten Transportwalze (24) am Transportpfad angeordnet ist und der Abstand (D) zwischen benachbarten flachen Gütern und/oder die Länge (L) des flachen Guts unter Beteiligung eines der beiden Sensoren (S2, S3) von der Steuereinheit (2.4) ermittelt werden.

**8.** Zuführstation, nach den Ansprüchen 1 bis 5, **gekennzeichnet dadurch, dass** die Funktion des Ermittlungsmittels (2.45) teilweise oder ganz durch ein FPGA ausgeführt wird.

**9.** Zuführstation, nach Anspruch 8, **gekennzeichnet dadurch, dass** die teilweise Ausführung der Ermittlung der Boostzählparameter durch Softwaremodule des Prozessors (2.41) und/oder weitere diskrete Baugruppen auf dem Mainboard der Steuereinheit (2.4) unterstützt wird, die mit dem FPGA zusammenwirken.

**10.** Zuführstation, nach Anspruch 6, **gekennzeichnet dadurch, dass** die Position eines Poststückes als Zählstand des Zählers widergespiegelt wird, wobei der Zählstand für die Position der Hinterkante des ersten Poststücks (Pn) genau dann einem dritten Zählstand ($Z_3 = i+k$) ergibt, wenn der Detektionsbereich des dritten Sensors (S3) vom ersten Poststück verlassen wird, und wobei ein fünfter Zählstand ($Z_5 = i+m$) erreicht wird, wenn während des Weitertransports des ersten Poststücks (Pn) die Vorderkante des aktuell vereinzelten Poststücks (Pn+1) den dritten Wegpunkt (W3) erreicht, wobei der fünfte Zählstand ($Z_5$) größer ist, als der dritte Zählstand ($Z_3$).

**11.** Zuführstation, nach Anspruch 1, **gekennzeichnet dadurch, dass** das nachfolgende Gutverarbeitungsgerät (3) eine Frankiermaschine ist.

## Claims

**1.** Feeding station for feeding a flat item to be fed, individually or singularized from the bottom of a stack, to a downstream item processing appliance (3), having a singularization zone and a transport zone, the transport zone being arranged in transport direction downstream the singularization zone on a transport path, wherein the feeding station (2) comprises drive motors with associated encoders, further mechanical drive elements, sensors, as well as a control unit for driving a transport device, and wherein the control unit (2.4) is connected on its input side with a number of sensors (S1, S2, S3) and encoders,
**characterized in**

    - **that** the sensors and drive elements are respectively arranged in a frame (27) of the feeding station (2) in a position orthogonally to the transport path so that the orthogonal mapping of each position respectively corresponds to one waypoint on the transport path and that the waypoints lie in a row in transport direction,
    - **that**, on the transport path, there can be mapped a first waypoint (W1) orthogonally to the position of a second sensor (S2), a second waypoint (W2) orthogonally to the position of a rotating axle-shaft (240) of a first transport roller (24), a third waypoint (W3) orthogonally to the position of a third sensor (S3), and a fourth waypoint (W4) orthogonally to the position of a rotating axle-shaft (250) of a second transport roller (25),
    - **that** there is provided a first distance (A) between the third waypoint (W3) and the fourth waypoint (W4) and there is provided a second distance (B) between the fourth waypoint (W4) and an end waypoint Wend that is arranged at a third distance (C) to a following entry waypoint (Win), wherein the entry waypoint (Win) can be mapped on the transport path orthogonally to the position of a rotating axle-shaft of a drive element (31) at the entry of the downstream item processing appliance (3),
    - **that** the respective distances (A, B, C) are constant, that the first distance (A) is smaller than the minimum length (Lmin) of the flat items to be transported, wherein the first distance (A) is bigger than/equal to the second distance (B), and that the distance (C) is much smaller than the second distance (B), and
    - **that** the control unit (2.4) of the feeding station is programmed for controlling the transport speeds of the transport device in such a way that a distance (D) between the singularized flat items determined at the start of a transport zone is reduced to a minimum distance (Dmin) and is always of equal length when these items leave the feeding station, wherein said control unit (2.4)

i) has at least one determination means (2.45) for determining the position of the flat item on the transport path and a processor (2.41), wherein the processor, by means of a counter and an encoder (EN2) of the transport device and with the involvement of one of the sensors (S2, S3), determines and stores count values, said count values corresponding to a respective number of encoder impulses, wherein a respective count value is reached when a flat item gets to at least one selected waypoint of a transport path, a numerical value Z(D) corresponding to the distance (D) between the singularized flat items, and wherein, by an application program stored in a program memory (2.42) of the control unit (2.4), the processor (2.41) is programmed

• to determine by calculation the respective position of the currently singularized flat item and of the flat item transported before as well as the distance (D) between the front edge of the currently singularized flat item and the rear edge of the flat item transported before,

• to calculate a number of boost count parameters (Z(VTBoost), Z(Wstart), Z(Wend)) for achieving a short-time increase of the transport speed (VTBoost) of the currently singularized flat item in a boost count area (ZBoost) in which the determined distance (D) is reduced to a minimum distance (Dmin) between the subsequently singularized items, wherein the boost count area (ZBoost) results from the sum of the numerical value (Z(D)) for the distance (D) and a fixed numerical value (Z(B)) for the second distance (B), wherein $Z(D) \leq Z(A)$ and wherein a pre-defined transport speed (VTsoll) was agreed between the feeding station (2) and a downstream item processing appliance (3) in order to transfer singularized flat items from the feeding station (2) to the downstream item processing appliance (3), wherein the pre-defined transport speed (VTsoll) corresponds to a fixed numerical value (Z(VTsoll)), and wherein the increased transport speed (VTBoost) is higher than the agreed pre-defined transport speed (VTsoll), wherein the boost count parameter (Z(Wstart)) is calculated for a start waypoint (Wstart) and the boost count parameter (Z(Wend)) for an end waypoint (Wend),

ii) is connected on its output side with a drive motor (M2) of the transport device which transports a currently singularized flat item at the increased transport speed (VTBoost) in downstream direction, after the count value of the counter has reached the precalculated count value (Z(Wstart)) for the start waypoint, said increased transport speed being maintained until the count value of the counter reaches the precalculated count value (Z(Wend)) for the end waypoint (Wend), wherein for achieving the increased transport speed, a numerical value (Z(VTBoost)) is determined by multiplying the boost count area (ZBoost) by a factor (Z(K)).

2. Feeding station according to Claim 1, **characterized in that** the numerical value (Z(D)) is a numerical value (Z(Dist)) that is determined for a current gap (Dist) a the start of the transport zone and that the factor (Z(K)) as a numerical value results from the quotient of a numerical value (Z(VTsoll)) for the agreed pre-defined transport speed (VTsoll) and the sum of a numerical value (Z(Dmin)) for the minimum distance (Dmin) and a numerical value (Z(B)) for the second distance (B).

3. Feeding station according to Claim 1, **characterized in that** the control unit has a processor (2.41) and a signal processing means (2.44) for the signals of the sensors and of the encoder (EN2) that interact with the detection means (2.45).

4. Feeding station according to Claim 1, **characterized in that** the third distance (C) is chosen at least that large that the position of the end waypoint (Wend) does not yet correspond to the position (Wln) on the transport path.

5. Feeding station according to Claim 1, **characterized in that** the flat item is a postal item and that at least one counter is a component of the detection means (2.45) and is designed for determining the position of the postal item with a plurality of waypoints on the transport path, that the determination is made by the processor (2.41) through the count value of the at least one counter of the detection means (2.45), wherein there is assigned to the start waypoint (Wstart) a count value of the counter resulting from the sum of a numerical value Z(A) for the distance (A) and a count value ($Z_3$) that is measured when the rear edge (q(n)) of a first postal item (Pn) leaves the third sensor (S3), and wherein there is assigned to the end waypoint (Wend) a count value of the counter resulting from the sum of the numerical value for the distance (A), a numerical value for a distance (B) and a count value ($Z_5$) that is measured when the front edge (p(n+1)) of the currently singularized postal item (Pn+1) reaches the sensor (S3).

6. Feeding station according to Claims 1 to 5, **characterized in that** the transport device is of such design that successive postal items (Pn) and (Pn+1) pass the third sensor (S3) by, wherein, upon passing the third sensor, the processor (2.41) determines count values of the counter and determines a difference ($\Delta$) between two count values ($Z_5$ and $Z_3$) which corresponds to a numerical value ($Z(Dist) = Z_5 - Z_3$) which can be determined for the current gap (Dist) that is present at the beginning of the transport zone between the directly successive postal items (Pn) and (Pn+1), that the increased transport speed is only determined by the processor (2.41) when the current gap (Dist) is larger than the required minimum distance (Dmin), and that the boost count area for a transport of the postal item (Pn+1) at the increased transport speed is determined by the processor (2.41) when it has been found that the third sensor detects the front edge of the subsequent postal item (Pn+1), wherein the boost zone related to the boost count area extends from the start waypoint (Wstart) to the end waypoint (Wend) on the transport path.

7. Feeding station according to Claim 1, **characterized in that** the second sensor (S2) is arranged in the item flow upstream and the third sensor (S3) downstream the first transport roller (24) on the transport path and that the distance (D) between neighbouring flat items and/or the length (L) of the flat item are determined by the control unit (2.4) with the involvement of one of the two sensors (S2, S3).

8. Feeding station according to Claims 1 to 5, **characterized in that** the function of the determination means (2.45) is completely or in part performed by an FPGA.

9. Feeding station according to Claim 8, **characterized in that** the partial performance of the determination of the boost count parameters is supported by software modules of the processor (2.41) and/or further discrete assemblies on the mainboard of the control unit (2.4) that interact with the FPGA.

10. Feeding station according to Claim 6, **characterized in that** the position of a postal item is reflected as a count value of the counter, wherein the count value for the position of the rear edge of the first postal item (Pn) yields a third count value ($Z_3$ = i+k) exactly at the moment when the first postal item leaves the detection range of the third sensor (S3), and wherein a fifth count value ($Z_5$ = i+m) is reached when, during the continued transport of the first postal item (Pn), the front edge of the currently singularized postal item (Pn+1) reaches the third waypoint (W3), the fifth count value ($Z_5$) being higher than the third count value ($Z_3$).

11. Feeding station according to Claim 1, **characterized in that** the downstream item processing appliance (3) is a franking machine.

**Revendications**

1. Station d'acheminement, pour acheminer un article plat, qui, individuellement ou individualisé à partir du bas d'une pile, est acheminé vers un appareil de traitement d'articles subséquent (3), avec une zone d'individualisation et avec une zone de transport, qui est agencée dans le sens du transport en aval du flux à un chemin de transport, la station d'acheminement (2) comportant des moteurs d'entraînement avec des encodeurs correspondants, d'autres éléments d'entraînement mécaniques, des capteurs ainsi qu'une unité de commande pour la commande d'un dispositif de transport, l'unité de commande (2.4) étant connectée par ses entrées à un nombre de capteurs (S1, S2, S3) et d'encodeurs dans un circuit, ,
**caractérisée en ce,**

- **que** l'agencement des capteurs et des éléments d'entraînement s'effectue dans un châssis (27) de la station d'acheminement (2) respectivement dans une position orthogonale par rapport au chemin de transport, de sorte que la transformation orthogonale de chaque position corresponde respectivement à un point de cheminement sur le chemin de transport et que les points de cheminement soient situés dans une rangée dans le sens du transport,
- **que** soit reproductible sur le chemin de transport un premier point de cheminement (W1) orthogonal à la position d'un deuxième capteur (S2), un deuxième point de cheminement (W2) orthogonal à la position d'un arbre tournant (240) d'un premier rouleau de transport (24), un troisième point de cheminement (W3) orthogonal à la position d'un troisième capteur (S3) et un quatrième point de cheminement (W4) orthogonal à la position d'un arbre tournant (250) d'un deuxième rouleau de transport (25),
- **que** soient prévues une première distance (A) entre le troisième point de cheminement (W3) et le quatrième point de cheminement (W4) et une deuxième distance (B) entre le quatrième point de cheminement (W4) et un point de cheminement final (Wend), qui est situé dans une troisième distance (C) à un point de cheminement d'entrée (Wln) subséquent, le point de cheminement d'entrée (Wln) étant reproductible sur le chemin de transport de manière orthogonale à la position d'un arbre d'un élément d'entraînement (31) à l'entrée de l'appareil de traitement d'articles subséquent (3),

- **que** les distances (A, B, C) soient respectivement constantes, que la première distance (A) soit inférieure à la longueur minimale (Lmin) des articles plats à transporter, la première distance (A) étant supérieure ou égale à la deuxième distance (B) et la distance (C) étant très inférieure à la deuxième distance (B) ainsi

- **que** l'unité de commande (2.4) de la station d'acheminement soit programmée pour commander la vitesse de transport du dispositif de transport de telle sorte, qu'une distance (D) déterminée au début de la zone de transport entre les articles plats individualisés soit réduite à une distance minimale (Dmin) et qu'elle soit toujours identique, lorsque ceux-ci quittent la station d'acheminement, l'unité de commande (2.4)

i) comportant au moins un moyen de détermination (2.45) pour déterminer la position de l'article plat sur le chemin de transport et un processeur (2.41), le processeur étant prévu pour déterminer et enregistrer des valeurs de comptage avec la participation d'un des encodeurs (S2, S3) à l'aide d'un compteur et d'un encodeur (EN2) du dispositif de transport, les valeurs de comptage correspondant respectivement à un nombre d'impulsions d'encodeur, un état de comptage étant atteint, lorsqu'un article plat arrive à au moins un point de cheminement sélectionné d'un chemin de transport, une valeur numérique Z(D) correspondant à la distance (D) entre les articles plats individualisés et le processeur (2.41) étant programmé par un programme d'application enregistré dans une mémoire de programme (2.42) de l'unité de commande (2.4),

• pour déterminer par calcul la position respective de l'article plat individualisé actuellement et de l'article plat suivant transporté ainsi que la distance (D) entre le bord avant de l'article plat individualisé actuellement et le bord arrière de l'article plat suivant transporté,

• pour calculer un nombre de paramètres de comptage Boost (Z(VTBoost), Z(Wstart), Z(Wend)) pour l'atteinte brève d'une vitesse de transport accrue (VTBoost) de l'article plat individualisé actuellement dans une zone de comptage Boost (ZBoost), dans laquelle la distance (D) déterminée soit réduite sur une distance minimale (Dmin) entre les articles plats individualisés qui se suivent, une zone de comptage Boost (ZBoost) résultant de la somme de la valeur numérique (Z(D)) pour la distance (D) et d'une valeur numérique fixe (Z(B)) pour la deuxième distance (B), Z(D) étant $\leq$ Z(A) et une vitesse de transport prédéfinie (VTsoll) entre la station d'acheminement (2) et un appareil de traitement d'articles subséquent (3) ayant été convenue, pour transmettre des articles plats individualisés de la station d'acheminement (2) à l'appareil de traitement d'articles subséquent (3), la vitesse de transport prédéfinie (VTsoll) correspondant à une valeur de comptage fixe (Z(VTsoll)), et la vitesse de transport accrue (VTBoost) étant supérieure à la vitesse de transport prédéfinie convenue (VTsoll), le paramètre de comptage Boost (Z(Wstart)) étant calculé pour un point de cheminement de départ (Wstart) et le paramètre de comptage Boost (Z(Wend)) étant calculé pour un point de cheminement final (Wend),

ii) étant connectée de par ses entrées avec un moteur d'entraînement (M2) du dispositif de transport, qui transporte en aval du flux avec la vitesse de transport accrue (VTBoost) un article plat individualisé actuellement, lorsque l'état de comptage du compteur a atteint l'état de comptage précalculé (Z(Wstart)) pour le point de cheminement de départ, la vitesse de transport accrue étant maintenue jusqu'à ce que l'état de comptage du compteur ait atteint l'état de comptage précalculé (Z(Wend) pour le point de cheminement final (Wend), une valeur numérique (Z(VTBoost)) étant déterminée de la multiplication de la zone de comptage Boost (ZBoost) avec un facteur (Z(K)) pour atteindre la vitesse de transport accrue.

2. Station d'acheminement selon la revendication 1, **caractérisée en ce, que** la valeur numérique (Z(D)) soit une valeur numérique (Z(Dist)), qui est déterminée pour un écart actuel (Dist) au début de la zone de transport ainsi que le facteur (Z(K)) découle du quotient d'une valeur numérique (Z(VTsoll)) pour la vitesse de transport prédéfinie convenue (VTsoll) et de la somme d'une valeur numérique (Z(Dmin)) pour la distance minimale (Dmin) et d'une valeur numérique (Z(B)) pour la deuxième distance (B).

3. Station d'acheminement selon la revendication 1, **caractérisée en ce, que** l'unité de commande comporte un processeur (2.41) et un moyen de traitement de signaux (2.44) pour les signaux des capteurs et de l'encodeur (EN2), qui coopèrent avec le moyen de détermination (2.45).

4. Station d'acheminement selon la revendication 1, **caractérisée en ce, que** la valeur de la troisième distance (C) soit au moins sélectionnée, de sorte que la position du point de cheminement final (Wend) ne concorde pas encore avec la position (Wln) sur le chemin de transport.

**5.** Station d'acheminement selon la revendication 1, **caractérisée en ce, que** l'article plat soit un article postal et qu'au moins un compteur soit un composant du moyen de détermination (2.45) et soit conçu pour la détermination de la position de l'article postal pour une pluralité de points de cheminement sur le chemin de transport, que la détermination s'effectue par le processeur (2.41) à l'aide de l'état de comptage de l'au moins un compteur du moyen de détermination (2.45), le point de cheminement de départ (Wstart) faisant l'objet de l'affectation d'un état de comptage du compteur, qui résulte de la somme d'une valeur numérique Z(A) pour la distance (A) et d'un état de comptage (Z3), qui est mesuré lorsque le bord arrière (q(n)) d'un premier article postal (Pn) quitte le troisième capteur (S3) et le point de cheminement final (Wend) faisant l'objet de l'affectation d'un état de comptage du compteur, qui résulte de la somme de la valeur numérique pour une distance (A), de la valeur numérique pour une distance (B) et d'un état de comptage (Z5), qui est mesuré lorsque le bord avant (p(n+1)) de l'article postal individualisé actuellement (Pn+1) atteint le capteur (S3).

**6.** Station d'acheminement selon les revendications 1 à 5, **caractérisée en ce, que** le dispositif de transport soit conçu de telle manière, que des articles postaux qui se suivent (Pn) et (Pn+1) passent au troisième capteur (S3), le processeur (2.41) effectuant la détermination d'états de comptage du compteur lors du passage au troisième capteur ainsi qu'une différence (A) entre deux états de comptage (Z5 et Z3), qui correspond à une valeur numérique (Z(Dist) = Z5 - Z3), qui peut être déterminée pour l'écart actuel (Dist) présent au début de la zone de transport entre les articles postaux (Pn) et (Pn+1) se suivant directement, que la détermination de la vitesse de transport accrue par le processeur (2.41) soit seulement effectuée, lorsque l'écart actuel (Dist) est supérieur à la distance minimale (Dmin) requise, et que la zone de comptage Boost pour un transport de l'article postal (Pn+1) avec la vitesse de transport accrue soit déterminée par le processeur (2.41), lorsqu'il a été constaté, que le troisième capteur détecte le bord avant de l'article postal subséquent (Pn+1), la zone Boost correspondante à la zone de comptage Boost étant la zone qui s'étend du point de cheminement de départ (Wstart) au point de cheminement final (Wend) sur le chemin de transport.

**7.** Station d'acheminement selon la revendication 1, **caractérisée en ce, que** le deuxième capteur (S2) soit agencé en amont du flux des articles et le troisième capteur (S3) en aval du flux des articles du premier rouleau de transport (24) au chemin de transport et que soient déterminées la distance (D) entre des articles plats voisins et/ou la longueur (L) de l'article plat avec la participation d'un des deux capteurs (S2, S3) de l'unité de commande (2.4).

**8.** Station d'acheminement selon les revendications 1 à 5, **caractérisée en ce, que** la fonction du moyen de détermination (2.45) soit exécutée partiellement ou intégralement par un circuit logique programmable (FPGA - field-programmable gate array).

**9.** Station d'acheminement selon la revendication 8, **caractérisée en ce, que** l'exécution partielle de la détermination des paramètres de comptage Boost soit soutenue par des modules logiciels du processeur (2.41) et/ou par des modules discrets supplémentaires sur la carte mère de l'unité de commande (2.4), qui coopèrent avec le FPGA.

**10.** Station d'acheminement selon la revendication 6, **caractérisée en ce, que** la position d'un article postal soit reflétée en tant qu'état de comptage du compteur, l'état de comptage pour la position du bord arrière du premier article postal (Pn) représentant exactement un troisième état de comptage (Z3 = i+k), lorsque le premier article postal quitte la zone de détection du troisième capteur (S3), et un cinquième état de comptage (Z5 = i+m) étant atteint, lorsque le bord avant de l'article postal individualisé actuellement (Pn+1) atteint le troisième point de cheminement (W3) pendant la suite du transport du premier article postal (Pn), le cinquième état de comptage (Z5) étant supérieur au troisième état de comptage (Z3).

**11.** Station d'acheminement selon la revendication 1, **caractérisée en ce, que** l'appareil de traitement d'articles subséquent (3) soit une affranchisseuse.

Fig.1

**Fig. 2a**

Encoder-zählstand   $Z_1 = i$

S3

Transportrichtung

Antriebselement

Pn   p(n)   240   W2   W3

250   A   B   C   WIn

31   Wend   Transportpfad

W4

2   3

**Fig. 2b**

Encoder-zählstand   $Z_5 = i+m$   $Z_3 = i+k$   $Z_1 = i$

S3

Transportrichtung

Pn+1   p(n+1)   240   W3

Dist   q(n)   Pn   250   p(n)

X   X

A   B

Wstart   W4   Wend   Transportpfad

**Fig. 3a**

**Fig. 3b**

**Steuereinheit**

| 2.41 | 2.42 | 2.43 | 2.49 |
| 2.44 | | | 2.48 |
| 2.45 | Kommunika-tionseinheit | | |

2.4

295

M1

285

M2

EN1

294

2.5

2.7

284   EN2

S1

S2

S3

**Fig. 4a**

Stapel

LS1   265   LS2   LS3   2   3

Pn   24   21   25

LC1   22   23   250

220   230   LC2   240   LC3

W1   W2   W3   Wstart   W4

**Fig. 4b**

23

Fig. 4c

Fig. 4d

Stapel · LS1 · LS2 · LS3

24 · 21 · 25

1 · 22 · 23 · 2 · 3

**Fig. 5a**

Stapel · 265

22 · 23

**Fig. 5b**

Pn

**Fig. 5c**

Pn+1 · 265 · Pn

**Fig. 5d**

Pn+1 · Pn

**Fig. 5e**

Fig. 5f

Fig. 5g

Fig. 5h

Fig. 5i

Fig. 5j

100

Start — 101

102 - 103

Initialisierung der Zuführungsstation, Aufrufen des Standardmodus & Setze Zähler des Encoders EN2 auf Anfangswert $Z_u$ bei u=0 & Setze einen Zählwert Z(Dmin) für eine Mindestlücke Dmin:= 60 mm

FM

104 — Information an die Frankiermachine (FM) senden & Information von d. FM empfangen

FM

105 — Abfrageergebnis & Informationen speichern

nein

106 — System bereit ?

a ◇ ja

110 — Starten des Transportmotors

b ◇

120 — Starten der Vereinzelung

c ◇

130 — Abziehen des untersten Poststücks

d ◇

140 — Regelung der Transportgeschwindigkeit bis der 2.Sensor frei wird

e ◇

150 — Vereinzelung steuern für ein nachfolgendes Poststück Pn+1

◇ h    f ◇

160 — Lückenverringerungsroutine

M2 stop

180

g ◇    170

Voreinstellungsroutine

Stop

181

**Fig. 6**

**Fig. 7**

110

Starten des Transportmotors:

110.1 — Encoderzähler Nullen (i = 0), Encoderzähler starten

110.2 — Transportmotor M2 starten

**Fig. 8**

120

Starten der Vereinzelung:

120.1 — 1. Sensor detektiert Poststück Pn? (nein / ja)

120.2 — Vereinzelungsmotor M1 starten

**Fig. 9**

130

Poststück abziehen:

130.1 — 3. Sensor detektiert Pn-Vorderkante? (nein / ja)

130.2 — $Z_1 = i$

130.3 — Zählerstand $Z_1$ speichern, Vereinzelungsmotor M1 stoppen

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040223797 A1
- DE 10127993 A1